# EUROPEAN PATENT APPLICATION

(11) **EP 4 566 771 A1**
(43) Date of publication of application: **11.06.2025**
(21) Application number: 23850125.8
(22) Date of filing: 02.08.2023
(51) Int. Cl.: B25J 17/02, B25J 15/10

(54) **HAND AND ROBOT SYSTEM**

(30) Priority: 05.08.2022 JP 2022125878
(71) Applicant: KAWASAKI JUKOGYO KABUSHIKI KAISHA, Kobe-shi, Hyogo 650-8670 (JP)
(72) Inventor: MURASE, Yohei, Chuo-ku, Kobe-shi Hyogo 6508670 (JP); FUKUDA, Hiroaki, Chuo-ku, Kobe-shi Hyogo 6508670 (JP); ORYU, Tamami, Chuo-ku, Kobe-shi Hyogo 6508670 (JP); SATO, Eiji, Chuo-ku, Kobe-shi Hyogo 6508670 (JP)
(74) Representative: Müller-Boré & Partner Patentanwälte PartG mbB
(86) International application number: PCT/JP2023/028304
(87) International publication number: WO 2024/029571

(57) **Abstract**

A hand 100 includes a hand body 2, a gripper 3 that grips a workpiece, a coupler 4 that couples the gripper 3 to the hand body 2 such that a relative position of the gripper 3 to the hand body 2 is changeable, and a lock 9 that locks movement of the coupler 4. The lock 9 switches, by an opening/closing action, between a locked state where the lock 9 locks movement of the coupler 4 by contacting the gripper 3 and an unlocked state where the lock 9 unlocks movement of the coupler 4 by separating from the gripper 3.

## Description

### FIELD

The technique disclosed here relates to hands and robot systems.

### BACKGROUND

A hand known to date grips a workpiece to perform work. Patent Document 1, for example, discloses a hand that grips a component and inserts the gripped component into a hole in another component.

### CITATION LIST

### PATENT DOCUMENT

Patent Document 1: Japanese Patent Application Publication No. H05-285747

### SUMMARY

In work of a hand as described above, a positional accuracy of the hand has a significant influence on the work. For example, in the work of inserting a component into a hole, if the positions of the component and the hole are misaligned, the work of inserting the component is difficult. In addition, in the case where the insertion direction of the component is tilted with respect to the axis of the hole, the work of inserting the component is also difficult. This is not limited to the insertion work of components, the same holds for other work such as the work of picking up a component and the work of placing a component at a predetermined place. In view of this, enhancement of positional accuracy of the hand can be effective. However, to enhance positional accuracy of the hand, loads of sensing and control in controlling the position of the hand increase.

It is therefore an object of the technique disclosed here to ease work by a hand.

A hand disclosed here includes: a hand body; a gripper that grips a workpiece; a coupler that couples the gripper to the hand body such that a relative position of the gripper to the hand body is changeable; and a lock that locks movement of the coupler, wherein the lock switches, by an opening/closing action, between a locked state where the lock locks movement of the coupler by contacting the gripper and an unlocked state where the lock unlocks movement of the coupler by separating from the gripper.

A robot system disclosed here includes: the hand; a robot arm to which the hand is coupled; and a controller that controls the robot arm and the hand, wherein the controller causes the robot arm and the hand to perform insertion work of inserting the workpiece gripped by the hand into a predetermined hole.

The hand described above eases work by the hand.

The robot system eases work by a hand.

### BRIEF DESCRIPTION OF THE DRAWINGS

[FIG. 1] FIG. 1 is a schematic view illustrating a configuration of a robot system.
[FIG. 2] FIG. 2 is a perspective view of a hand.
[FIG. 3] FIG. 3 is a plan view of the hand.
[FIG. 4] FIG. 4 is a cross-sectional view of the hand taken along line IV-IV in FIG. 3.
[FIG. 5] FIG. 5 is a cross-sectional view of the hand taken along line V-V in FIG. 3.
[FIG. 6] FIG. 6 is a perspective cross-sectional view of a decentering coupler.
[FIG. 7] FIG. 7 is a perspective cross-sectional view of a tilt coupler.
[FIG. 8] FIG. 8 is a cross-sectional view of the hand illustrating a state where a gripper has moved in a second direction relative to a hand body.
[FIG. 9] FIG. 9 is a cross-sectional view of the hand illustrating a state where the gripper has rotated about a first rotation axis with respect to the hand body.
[FIG. 10] FIG. 10 is a cross-sectional view of the hand illustrating a state where a straight-moving actuator has moved the gripper in the direction of a first reference axis.
[FIG. 11] FIG. 11 is a cross-sectional view of the hand illustrating a state where an opening/closing actuator causes fingers to perform an opening action.
[FIG. 12] FIG. 12 is a side view of the hand.
[FIG. 13] FIG. 13 is a front view of the hand.
[FIG. 14] FIG. 14 is a cross-sectional view of the hand taken along line XIV-XIV in FIG. 13.
[FIG. 15] FIG. 15 is a side view of the hand while a lock is in an unlocked state
[FIG. 16] FIG. 16 is a block diagram schematically illustrating a hardware configuration of a controller.
[FIG. 17] FIG. 17 is a flowchart of insertion work.
[FIG. 18] FIG. 18 is a schematic view of the hand seen from the front when contact action is completed.
[FIG. 19] FIG. 19 is a schematic plan view illustrating a positional relationship between a workpiece and a hole when the contact action is completed.
[FIG. 20] FIG. 20 is a schematic view of the hand seen from the front when introduction action is completed.
[FIG. 21] FIG. 21 is a schematic plan view illustrating a positional relationship between the workpiece and the hole at start of an insertion action.
[FIG. 22] FIG. 22 is a schematic view of the hand seen from the front during the course of an insertion action.
[FIG. 23] FIG. 23 is a schematic plan view illustrating a positional relationship between the workpiece and the hole in the insertion action.
[FIG. 24] FIG. 24 is a schematic view of the hand seen from the front when the insertion action is completed.
[FIG. 25] FIG. 25 is a schematic view of the hand seen from the front when a contact action with a hole extending horizontally is completed.
[FIG. 26] FIG. 26 is a schematic view of the hand seen from the front when the introduction action into the hole extending horizontally is completed.
[FIG. 27] FIG. 27 is a schematic view of the hand seen from the front during the insertion action into the hole extending horizontally.

### DESCRIPTION OF EMBODIMENTS

An exemplary embodiment will be specifically described hereinafter with reference to the drawings.

### =Robot System=

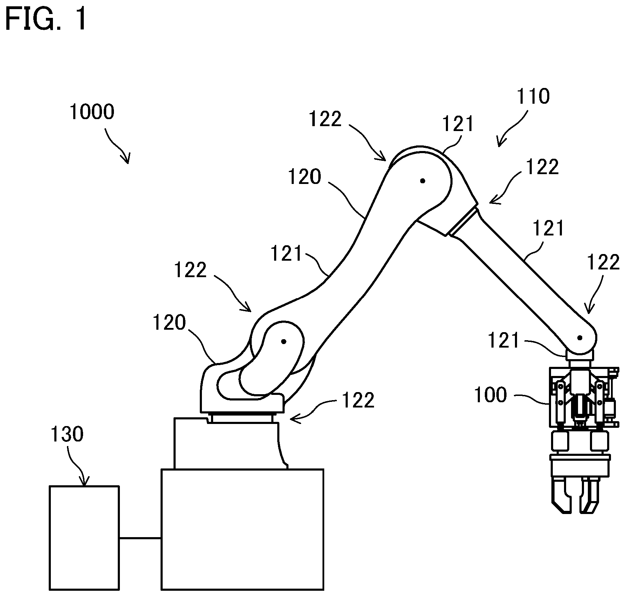

FIG. 1 is a schematic view illustrating a configuration of a robot system 1000.

The robot system 1000 includes a robot 110 including a robot arm 120 and a hand 100, and a controller 130 that controls the robot arm 120 and the hand 100. The hand 100 is coupled to the robot arm 120 (specifically a distal end of the robot arm 120). The hand 100 grips a workpiece to perform various treatments. For example, the controller 130 causes the robot arm 120 and the hand 100 to perform insertion work of inserting a workpiece gripped by the hand 100 into a predetermined hole. The insertion of the workpiece herein includes press fitting of the workpiece into the hole and screwing of the workpiece into a screw hole.

The robot 110 is, for example, an industrial robot. The robot 110 causes the hand 100 to act, that is, to move by the robot arm 120. The hand 100 is a so-called end effector. The hand 100 grips a workpiece. The hand 100 also regrips the workpiece, combines the workpiece to another workpiece, and so forth.

The robot arm 120 includes links 121, joints 122, and motors. Each of the joints 122 rotatably connects adjacent two of the links 121. Each of the motors rotationally drives the joints 122. Each motor is, for example, a servo motor.

### =Hand=

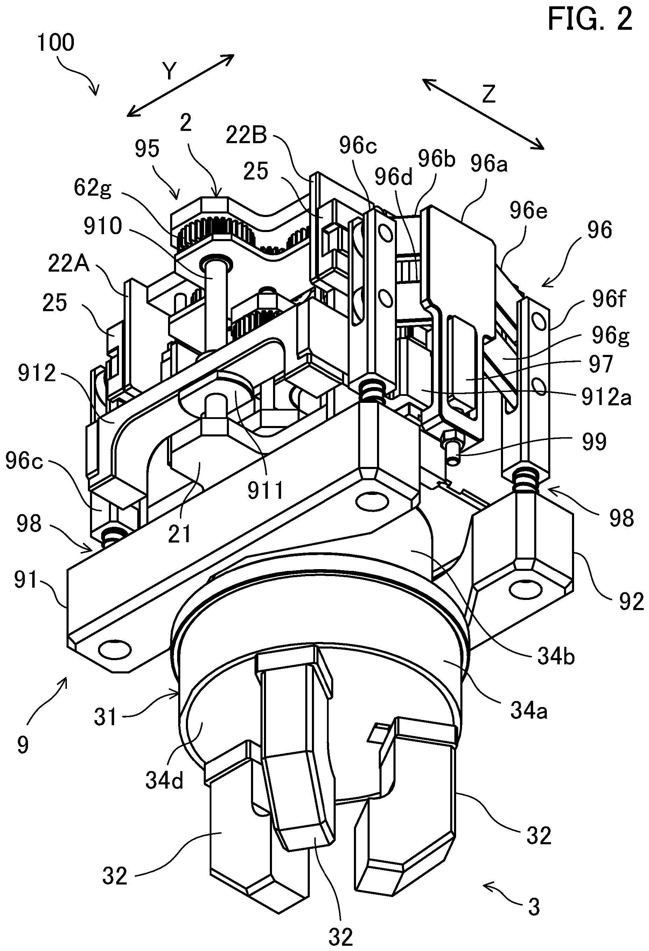

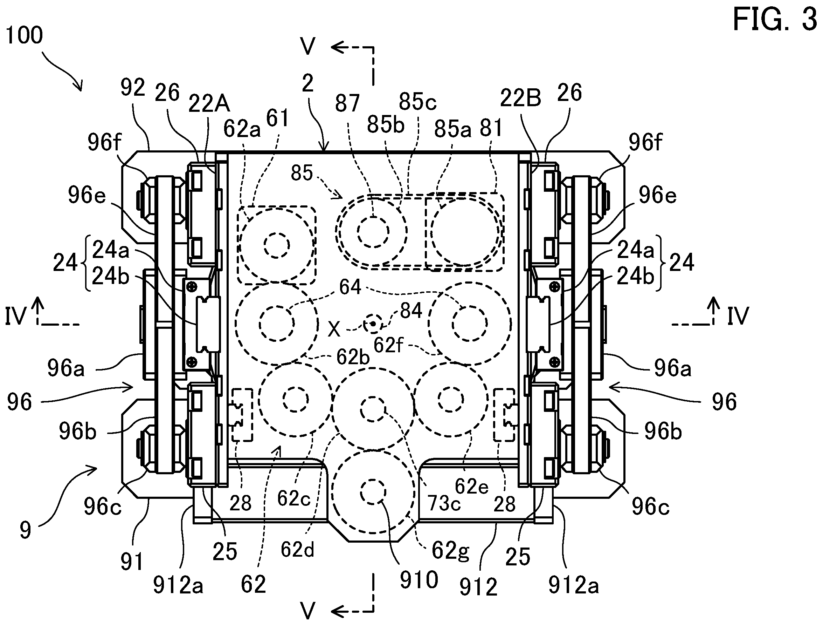

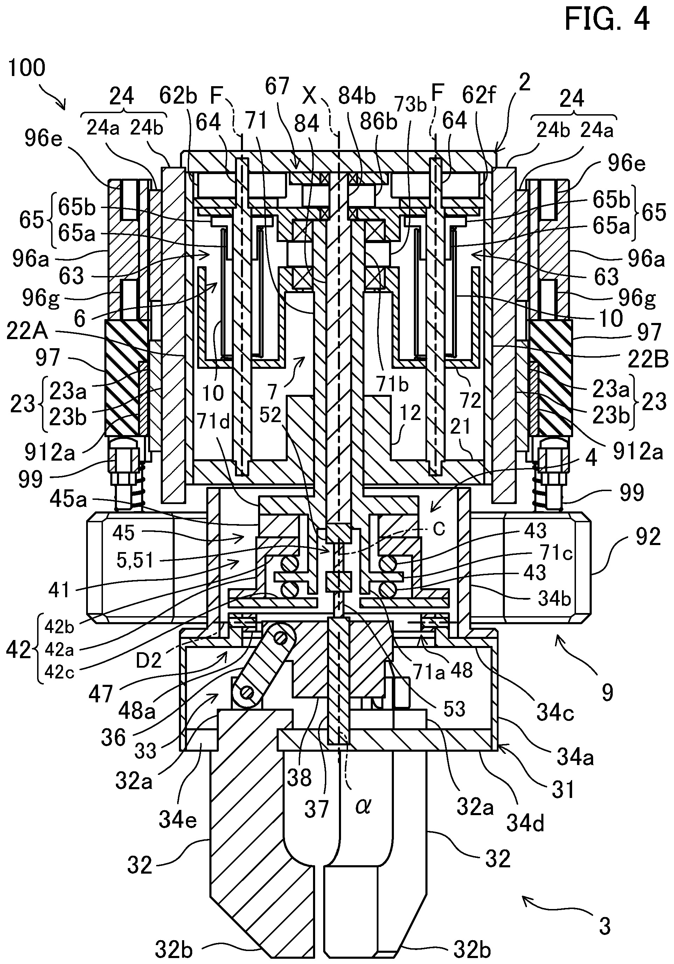

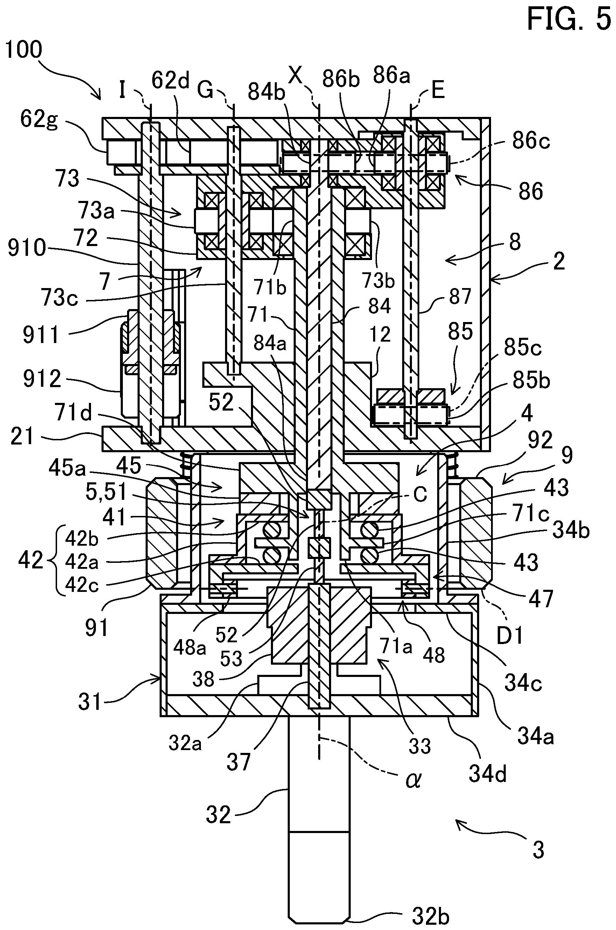

FIG. 2 is a perspective view of the hand 100. FIG. 3 is a plan view of the hand 100. FIG. 4 is a cross-sectional view of the hand 100 taken along line IV-IV in FIG. 3. FIG. 5 is a cross-sectional view of the hand 100 taken along line V-V in FIG. 3. In the drawings, some elements are not shown for easy understanding of the configuration. The same holds for the following drawings.

The hand 100 includes a hand body 2, a gripper 3 that grips a workpiece, and a coupler 4 that couples the gripper 3 to the hand body 2. In the hand body 2, a predetermined first reference axis X is defined. In the gripper 3, a predetermined second reference axis α is defined. The coupler 4 couples the gripper 3 to the hand body 2 such that the relative position of the gripper 3 to the hand body 2 is changeable. The coupler 4 includes a decentering coupler 41 that supports the gripper 3 such that the second reference axis α is capable of being decentered with respect to the first reference axis X, and a tilt coupler 47 that supports the gripper 3 such that the second reference axis α is capable of being tilted with respect to the first reference axis X.

The hand 100 can move the workpiece gripped by the gripper 3 straight in the direction of the first reference axis X while rotating the workpiece about the first reference axis X. Accordingly, the hand 100 inserts the workpiece into a hole or screw the workpiece into a screw hole, for example. A side to which the gripper 3 advances from the hand body 2 along the first reference axis X will be hereinafter referred to as an "advancing side" or a "distal side" and a side to which the gripper 3 retracts toward the hand body 2 along the first reference axis X will be hereinafter referred to as a "retracting side" or a "body side."

The hand 100 further includes a lock 9 that locks movement of the coupler 4. The lock 9 switches between a locked state where the lock 9 locks movement of the coupler 4 by contacting the gripper 3 and an unlocked state where the lock 9 unlocks movement of the coupler 4 by separating from the gripper 3. The lock 9 switches between the locked state and the unlocked state by an opening/closing action. When the lock 9 switches to the locked state, movement action of coupler 4 is locked so that the relative position of the gripper 3 to the hand body 2 becomes unchangeable. When the lock 9 switches to the unlocked state, the coupler 4 becomes freely movable so that the relative position of the gripper 3 to the hand body 2 becomes changeable.

As illustrated in FIG. 4, the hand 100 further includes first buffers 10 that absorb a force exerted on the gripper 3 in the direction of the first reference axis X.

As illustrated in FIG. 2, the hand body 2 is a box-shaped casing. The hand body 2 is an approximately rectangular parallelepiped. The hand body 2 includes a straight-moving actuator 6 that causes the gripper 3 to move straight in direction of the first reference axis X with respect to the hand body 2, a rotation actuator 7 that rotates the gripper 3 about the second reference axis α, and an opening/closing actuator 8 that opens and closes the gripper 3. The hand body 2 houses the straight-moving actuator 6, the rotation actuator 7, the opening/closing actuator 8, and the first buffers 10.

### -Gripper-

As illustrated in FIG. 4, the gripper 3 includes a base 31, fingers 32 supported by the base 31, and an operator 33 that causes the fingers 32 to perform an opening/closing action. In this example, as illustrated in FIG. 2, the gripper 3 includes three fingers 32.

As illustrated in FIG. 2, the base 31 is approximately tubular. Specifically, the base 31 has a first cylinder 34a, a second cylinder 34b, a ceiling 34c, and a bottom 34d. The ceiling 34c is illustrated in FIG. 4 and other drawings. As illustrated in FIG. 4, for example, the first cylinder 34a and the second cylinder 34b have substantially tubular coaxial shapes extending along the second reference axis α serving as a center axis. The ceiling 34c is located at one end of the first cylinder 34a in the direction of the second reference axis α. The ceiling 34c has a substantially disc shape about the second reference axis α. The ceiling 34c has an opening substantially at the center thereof. The first cylinder 34a and the ceiling 34c are formed as a single unit. The second cylinder 34b is attached to the ceiling 34c. The bottom 34d is attached to the other end of the first cylinder 34a in the direction of the second reference axis α. The bottom 34d has a substantially disc shape about the second reference axis α. The bottom 34d is formed as a separate component from the first cylinder 34a and the ceiling 34c and attached to the first cylinder 34a.

The bottom 34d has three slits 34e penetrating the bottom 34d in the thickness direction and extending radially about the second reference axis α. FIG. 4 shows one slit 34e. The slits 34e are arranged at regular intervals (i.e., at an interval of 120 degrees) in the circumferential direction about the second reference axis α.

The fingers 32 are supported by the bottom 34d to be slidable along the slits 34e. Specifically, each of the fingers 32 has a first end 32a supported by the base 31 and a second end 32b to contact a workpiece. The first end 32a is located at an inner side of the base 31 and slidably engaged with the bottom 34d. Accordingly, the fingers 32 are supported by the base 31 to be movable radially about the second reference axis α. The fingers 32 extend from the base 31 substantially in parallel with the second reference axis α.

The three fingers 32 are arranged at regular intervals (i.e., at an interval of 120 degrees) in the circumferential direction about the second reference axis α. The three fingers 32 move toward or away from each other radially about the second reference axis α to thereby open and close. The fingers 32 grip a workpiece at the second ends 32b.

The operator 33 includes links 36 coupled to the fingers 32, a feed screw 37 that extends along the second reference axis α serving as a center axis of the feed screw 37 and rotates about the second reference axis α, and a block 38 to which the feed screw 37 is screwed and the links 36 are coupled. The operator 33 is a so-called linkage.

One link 36 is coupled to one finger 32. One end of the link 36 is rotatably coupled to the finger 32 (specifically, the first end 32a).

The feed screw 37 and the block 38 define a so-called screw feeder. The feed screw 37 is located in the base 31. The feed screw 37 extends along the second reference axis α serving as a center axis of the feed screw 37, and is supported by the bottom 34d to be rotatable about the second reference axis α.

The links 36 are coupled to the block 38. Specifically, an end of each link 36 opposite to an end coupled to the finger 32 is rotatably coupled to the block 38. That is, one end of each link 36 is coupled to the finger 32, and the other end of the link 36 is coupled to the block 38. The fingers 32 penetrate the slits 34e and do not rotate about the second reference axis α with respect to the base 31. Accordingly, the block 38 coupled to the three fingers 32 through the links 36 does not rotate about the second reference axis α with respect to the base 31, either.

When the feed screw 37 rotates, the block 38 moves in the direction of the second reference axis α. When the block 38 moves in the direction of the second reference axis α, the links 36 move cooperatively, and accordingly, the fingers 32 move radially about the second reference axis α. When the block 38 approaches the bottom 34d, the fingers 32 move radially outward. On the other hand, when the block 38 moves away from the bottom 34d, the fingers 32 move radially inward.

### -Coupler-

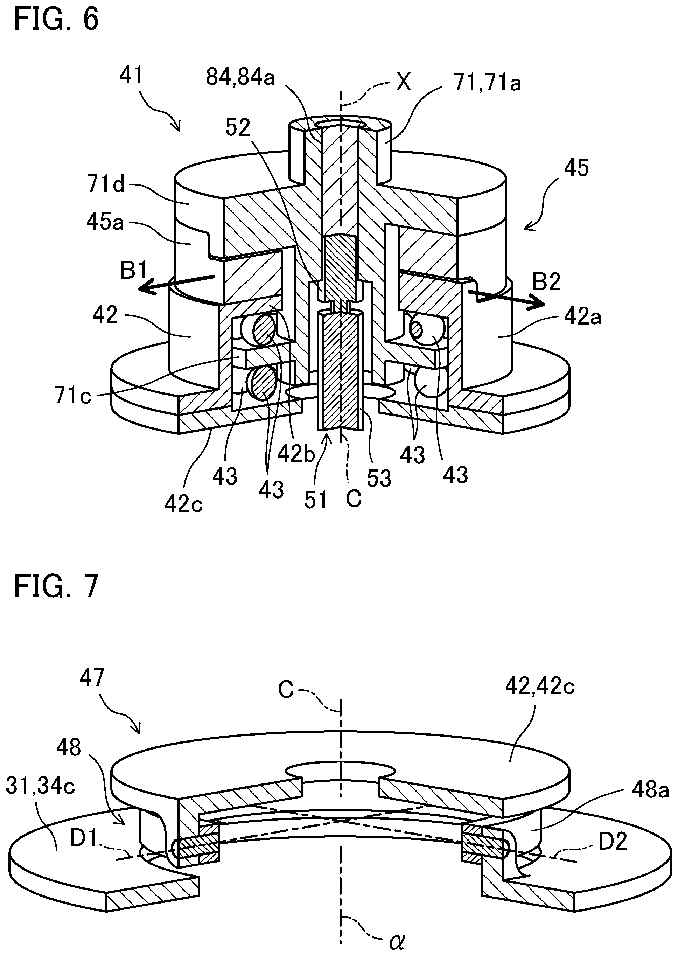

The coupler 4 couples the base 31 to the hand body 2. As illustrated in FIG. 4, the coupler 4 is coupled to the rotation actuator 7 of the hand body 2. The coupler 4 is located inside the second cylinder 34b. FIG. 6 is a perspective cross-sectional view of the decentering coupler 41.

The decentering coupler 41 is coupled to the rotation actuator 7. The rotation actuator 7 includes a rotation shaft 71 extending along the first reference axis X serving as a center axis of the rotation actuator 7, which will be described later in detail. A flange-shaped first disc 71c and a second disc 71d each expanding in a plane substantially orthogonal to the first reference axis X are located at a first end 71a that is one of two ends of the rotation shaft 71 closer to the coupler 4 than the other end. The first disc 71c is located closer to the distal side of the first end 71a than the second disc 71d is. The decentering coupler 41 is coupled to the first end 71a of the rotation shaft 71.

As illustrated in FIGS. 4, 5, and 6, the decentering coupler 41 includes a decentered body 42 coupled to the rotation shaft 71 such that the decentered body 42 is movable in a direction substantially orthogonal to the first reference axis X. The decentered body 42 includes a substantially tubular cylinder 42a, a substantially disc-shaped ceiling 42b, and a substantially disc-shaped bottom 42c. The decentered body 42 has a substantially tubular box shape as a whole. The cylinder 42a, the ceiling 42b, and the bottom 42c are coaxially arranged. That is, the cylinder 42a extends along an axis C serving as a center axis of the cylinder 42a, and the axis of each of the ceiling 42b and the bottom 42c is also the axis C. The ceiling 42b has an opening substantially at the center thereof. The bottom 42c has an opening substantially at the center thereof. The decentered body 42 houses the first disc 71c of the rotation shaft 71. That is, the rotation shaft 71 penetrates the opening of the ceiling 42b, and the first disc 71c is located between the ceiling 42b and the bottom 42c. The first disc 71c is substantially parallel to each of the ceiling 42b and the bottom 42c. That is, the axis C is substantially parallel to the first reference axis X. Rolling elements 43 are arranged circumferentially about the first reference axis X between the ceiling 42b and the first disc 71c. Similarly, rolling elements 43 are arranged circumferentially about the first reference axis X between the bottom 42c and the first disc 71c. In this example, the rolling elements 43 are balls. Rolling of the rolling elements 43 allows the decentered body 42 to move in a direction substantially orthogonal to the first reference axis X with respect to the rotation shaft 71. At this time, the decentered body 42 moves in parallel with a direction substantially orthogonal to the first reference axis X while keeping the posture (i.e., maintaining the substantially parallel relationship between the axis C and the first reference axis X). The decentered body 42 can move in parallel within a range in which the cylinder 42a contacts the first disc 71c. It should be noted that the decentered body 42 cannot move in the direction of the first reference axis X with respect to the rotation shaft 71.

As illustrated in FIGS. 4, and 5, the gripper 3 is coupled to the decentered body 42 through the tilt coupler 47. Accordingly, the gripper 3 can also move in the direction substantially orthogonal to the first reference axis X with respect to the rotation shaft 71 together with the decentered body 42.

The decentering coupler 41 also includes a second coupling 45. The second coupling 45 coupes the rotation shaft 71 and the gripper 3. The second coupling 45 is a coupling that couples two decentered substantially parallel axes, and transfers rotation between the two decentered axes. In this example, the second coupling 45 transfers rotation of the rotation 71 to the gripper 3 with the second reference axis α decentered with respect to the first reference axis X. In this example, the second coupling 45 is a so-called Oldham coupling.

Specifically, as illustrated in FIG. 6, the second coupling 45 includes a second disc 71d as a first hub, an insert 45a, and a decentered body 42 as a second hub. The decentered body 42, the insert 45a, and the second disc 71d are arranged in this order from the base 31 in the direction of the first reference axis X. The second disc 71d is integrated with the rotation shaft 71 (specifically, the first end 71a). The second disc 71d and the insert 45a are coupled to each other to be movable in a first direction B1 substantially orthogonal to the first reference axis X. The insert 45a and the decentered body 42 are coupled to each other to be movable in the second direction B2 substantially orthogonal to the first reference axis X and to the first direction B1. That is, the decentered body 42 is movable with respect to the second disc 71d within a plane substantially orthogonal to the first reference axis X. At this time, the decentered body 42 moves in parallel with a direction substantially orthogonal to the first reference axis X without changing the posture. It should be noted that the decentered body 42 cannot rotate about the first reference axis X with respect to the second disc 71d.

As illustrated in FIGS. 4, 5, and 6, the rotation shaft 71 penetrates the insert 45a and enters the inside of the decentered body 42. The second disc 71d rotates integrally with the rotation shaft 71. When the second disc 71d rotates about the first reference axis X, the decentered body 42 rotates together with the second disc 71d because the decentered body 42 is non-rotatable with respect to the second disc 71d. At this time, in a case where the axis C of the decentered body 42 is decentered with respect to the first reference axis X, the decentered body 42 rotates while moving in parallel relative to the rotation shaft 71 in a direction substantially orthogonal to the first reference axis X so that the decentered body 42 thereby rotates about the axis C while keeping a positional relationship between the axis C and the first reference axis X. That is, rotation about the first reference axis X input to the second disc 71d is output to the decentered body 42 as rotation about the axis C decentered with respect to the first reference axis X. Since the gripper 3 is coupled to the decentered body 42, when the decentered body 42 rotates, the gripper 3 rotates together with the decentered body 42.

FIG. 7 is a perspective cross-sectional view of the tilt coupler 47. The tilt coupler 47 includes a third coupling 48. The third coupling 48 couples the rotation shaft 71 and the gripper 3 to each other. The third coupling 48 is a coupling that couples two axes that tilt relative to each other (i.e., two axes with angular misalignment) and transfers rotation between two axes that tilt relative to each other. In this example, the third coupling 48 transfers rotation of the rotation shaft 71 to the gripper 3 with the second reference axis α tilted with respect to the first reference axis X. That is, the tilt coupler 47 not only couples the gripper 3 to the rotation shaft 71 such that the gripper 3 is capable of being tilted with respect to the rotation shaft 71, but also transfers rotation of the rotation shaft 71 to the gripper 3 with the second reference axis α tilted with respect to the first reference axis X. In this example, the third coupling 48 couples the rotation shaft 71 and the gripper 3 to each other with interposition of the decentering coupler 41.

The third coupling 48 includes a coupling element 48a. The coupling element 48a has a substantially ring shape. The coupling element 48a has a first rotation axis D1 and a second rotation axis D2 extending in directions approximately orthogonal to each other. In this example, the first rotation axis D1 and the second rotation axis D2 are present in the same plane, and the first rotation axis D1 and the second rotation axis D2 are approximately orthogonal to each other. The decentered body 42 is coupled to the coupling element 48a to be rotatable about the first rotation axis D1. More specifically, the bottom 42c of the decentered body 42 is coupled to the coupling element 48a. The first rotation axis D1 is substantially orthogonal to the axis C of the decentered body 42. In addition, the base 31 is coupled to the coupling element 48a to be rotatable about the second rotation axis D2. More specifically, the ceiling 34c of the base 31 is coupled to the coupling element 48a. The second rotation axis D2 is substantially orthogonal to the second reference axis α of the gripper 3.

The coupling element 48a is freely rotatable about the first rotation axis D1 with respect to the decentered body 42, and the base 31 is freely rotatable about the second rotation axis D2 with respect to the coupling element 48a. Accordingly, the gripper 3 is capable of being tilted with respect to the axis C of the decentered body 42. The third coupling 48 is a so-called universal coupling, more specifically, a cross coupling.

An action of the thus-configured coupler 4 will be described.

First, an action of the decentering coupler 41 will be described. When a force of moving the hand body 2 and the gripper 3 in a direction substantially orthogonal to the first reference axis X is applied to at least one of the hand body 2 or the gripper 3, the decentered body 42 moves in a direction substantially orthogonal to the first reference axis X with respect to the rotation shaft 71 by rolling of the rolling elements 43. At the same time, the insert 45a moves in the first direction B1 relative to the second disc 71d, and the decentered body 42 as a second hub moves in the second direction B2 relative to the insert 45a. With the movement of the decentered body 42, the decentered body 42 moves relative to the hand body 2 such that the axis C is decentered with respect to the first reference axis X. The gripper 3 coupled to the decentered body 42 moves relative to the hand body 2 such that the second reference axis α is decentered with respect to the first reference axis X.

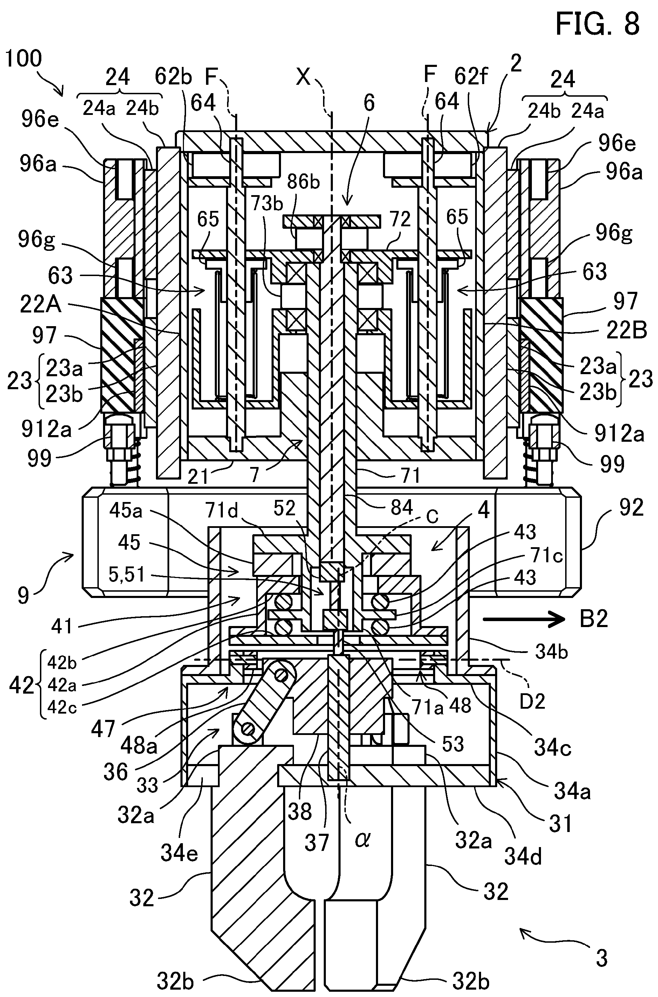

FIG. 8 is a cross-sectional view of the hand 100 illustrating a state where the gripper 3 has moved in the second direction B2 relative to the hand body 2. The decentered body 42 has moved in the second direction B2 in parallel with the insert 45a. Accordingly, the gripper 3 coupled to the decentered body 42 has also moved in the second direction B2 in parallel with the insert 45a. As a result, the second reference axis α of the gripper 3 is decentered with respect to the first reference axis X of the hand body 2.

Similarly, the insert 45a can move in the first direction B1 in parallel with the second disc 71d. Accordingly, the gripper 3 coupled to the second disc 71d through the insert 45a can also move in the first direction B1 in parallel with the second disc 71d. Such parallel movement of the gripper 3 in the first direction B1 and the parallel movement of the gripper 3 in the second direction B2 occur in combination so that the gripper 3 thereby moves in parallel in any direction substantially orthogonal to the first reference axis X and is decentered with respect to the first reference axis X.

In a case where the gripper 3 is fixed and the hand body 2 moves relative to the gripper 3, the hand body 2 moves relative to the gripper 3 in a direction substantially orthogonal to the first reference axis X such that the second reference axis α is decentered with respect to the first reference axis X.

In addition, when the rotation shaft 71 rotates about the first reference axis X with the second reference axis α, that is, the axis C, restrained at a position decentered with respect to the first reference axis X, the insert 45a moves relative to the second disc 71d and the decentered body 42 moves relative to the insert 45a. Accordingly, the decentered body 42 rotates about the axis C while keeping the decentered state between the axis C and the first reference axis X. In this manner, the decentering coupler 41 not only decenters the gripper 3 with respect to the first reference axis X but also transfers rotation of the rotation shaft 71 about the first reference axis X to the decentered body 42 as rotation about the axis C decentered with respect to the first reference axis X. Since the gripper 3 is coupled to the decentered body 42, the gripper 3 also rotates about the second reference axis α decentered with respect to the first reference axis X.

In this manner, the decentered body 42, that is, the gripper 3, is coupled to the rotation shaft 71 by the first disc 71c and the rolling elements 43 and by the second coupling 45 such that the gripper 3 is movable in parallel in the direction substantially orthogonal to the first reference axis X. The first disc 71c and the rolling elements 43 also have the function of transferring loads of components such as the gripper 3 and the workpiece in the direction of the first reference axis X to the rotation shaft 71 such that the loads are not exerted only on the second coupling 45. As described above, the second coupling 45 also has the function of transferring rotation between the first reference axis X and the axis C decentered from each other.

Next, an action of the tilt coupler 47 will be described. When a force of tilting the hand body 2 and the gripper 3 relative to each other is exerted on at least one of the hand body 2 or the gripper 3, the base 31 is allowed to rotate about the first rotation axis D1 and the second rotation axis D2 with respect to the decentered body 42. As a result, the second reference axis α of the base 31 is allowed to tilt with respect to the axis C of the decentered body 42. The axis C of the decentered body 42 is substantially parallel to the first reference axis X. Thus, the second reference axis α of the base 31 is tilted with respect to the first reference axis X.

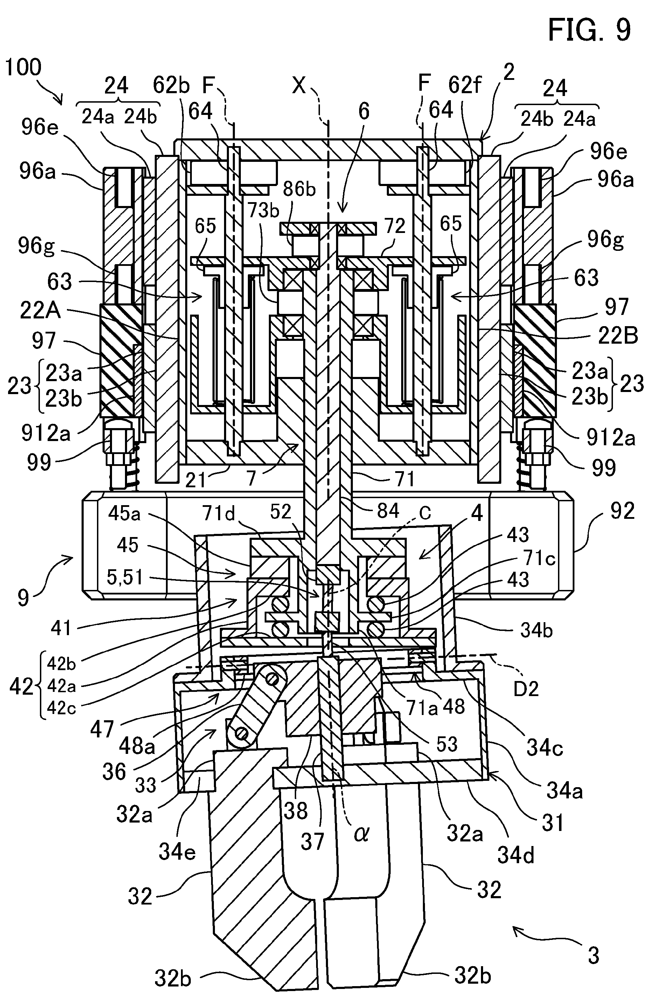

FIG. 9 is a cross-sectional view of the hand 100 illustrating a state where the gripper 3 has rotated about the first rotation axis D1 with respect to the hand body 2. The base 31 and the coupling element 48a rotate about the first rotation axis D1 with respect to the decentered body 42. Consequently, the second reference axis α of the gripper 3 tilts with respect to first reference axis X of the hand body 2.

Similarly, the base 31 can rotate about the second rotation axis D2 with respect to the coupling element 48a. Consequently, second reference axis α of the gripper 3 tilts in a direction different from that in FIG. 9 with respect to the first reference axis X of the hand body 2. Such rotation of the gripper 3 about the first rotation axis D1 and rotation about the second rotation axis D2 occur in combination so that the gripper 3 thereby tilts in any direction with respect to the first reference axis X.

In the case where the gripper 3 is fixed and the hand body 2 moves relative to the gripper 3, the hand body 2 moves relative to the gripper 3 such that the second reference axis α is tilted with respect to the first reference axis X.

When the decentered body 42 rotates about the axis C with the second reference axis α restrained in the tilt state with respect to the first reference axis X, the coupling element 48a rotates about the first rotation axis D1 relative to the decentered body 42 and the base 31 rotates about the second rotation axis D2 relative to the coupling element 48a so that the base 31 rotates about the second reference axis α without a change in posture of the second reference axis α.

In this manner, the coupler 4 supports the gripper 3 such that the gripper 3 is capable of being decentered with respect to the first reference axis X and supports the gripper 3 such that the gripper 3 is capable of being tilted with respect to the first reference axis X. In addition, the coupler 4 transfers rotation of the rotation shaft 71 about the first reference axis X to the gripper 3 as rotation about the second reference axis α with the second reference axis α of the gripper 3 decentered or tilted with respect to the first reference axis X.

### -Straight-moving Actuator and Rotation Actuator-

The straight-moving actuator 6 moves the rotation shaft 71 in the direction of the first reference axis X to thereby move the gripper 3 straight in the direction of the first reference axis X. The rotation actuator 7 rotates the rotation shaft 71 about the first reference axis X to thereby rotate the gripper 3 about the first reference axis X. In this example, some elements are shared by the straight-moving actuator 6 and the rotation actuator 7. The straight-moving actuator 6 shares some elements with the opening/closing actuator 8. The rotation actuator 7 shares some elements with the opening/closing actuator 8.

The straight-moving actuator 6 includes a second motor 61 that generates a driving force, and a straight-moving transfer 67 that transfers the driving force of the second motor 61 to the gripper. The second motor 61 is an example of a straight-moving driving source. The straight-moving transfer 67 includes a first gear train 62 that transfers a driving force (i.e., rotation torque) of the second motor 61, screw feeders 63, a rotation shaft 71, and a gear box 72. As illustrated in FIG. 4, most part of the straight-moving actuator 6 is located in the hand body 2.

As illustrated in FIGS. 4 and 5, the rotation shaft 71 is has a substantially tubular shape extending along the first reference axis X serving as a center axis of the rotation shaft 71. The rotation shaft 71 is supported by a bearing 12 attached to the hand body 2 to be movable in the direction of the first reference axis X and rotatable about the first reference axis X. One end of the rotation shaft 71 in the direction of the first reference axis X will be referred to as the first end 71a, and the other end of the rotation shaft 71 in the direction of the first reference axis X will be referred to as a second end 71b. The first end 71a is an end on the advancing side in the direction of the first reference axis X. The second end 71b is an end on the retracting side in the direction of the first reference axis X. The rotation shaft 71 penetrates the bottom 21 of the hand body 2. The first end 71a is located outside the hand body 2.

A flange-shaped first disc 71c and a second disc 71d each expanding in a plane substantially orthogonal to the first reference axis X are located at the first end 71a of the rotation shaft 71. The first disc 71c is located closer to the distal end of the first end 71a than the second disc 71d is.

As illustrated in FIG. 3, the second motor 61 is located in the hand body 2. The second motor 61 is, for example, a servo motor and includes an encoder. A driver of the second motor 61 includes a current sensor. The second motor 61 is supported by the hand body 2.

As illustrated in FIG. 3, the first gear train 62 is located in the hand body 2. The first gear train 62 includes gears rotatably supported by the hand body 2. The first gear train 62 includes a first gear 62a, a second gear 62b, a third gear 62c, a fourth gear 62d, a fifth gear 62e, a sixth gear 62f, and a seventh gear 62g. The first gear 62a, the second gear 62b, the third gear 62c, the fourth gear 62d, the fifth gear 62e, and the sixth gear 62f are arranged in this order and mesh with one another. The seventh gear 62g meshes with the fourth gear 62d. The first gear 62a is attached to an output shaft of the second motor 61. The first gear 62a is a driving gear. The second gear 62b, the third gear 62c, the fourth gear 62d, the fifth gear 62e, the sixth gear 62f, and the seventh gear 62g are driven gears that transfer a driving force of the second motor 61. The second gear 62b and the sixth gear 62f transfer the driving force of the second motor 61 to the feed screw 64 of the straight-moving actuator 6. The fourth gear 62d transfers the driving force of the second motor 61 to the ball spline 73c of the rotation actuator 7. The seventh gear 62g transfers the driving force of the second motor 61 to a feed screw 910 of a lock actuator 93 described later. The third gear 62c and the fifth gear 62e are so-called intermediate gears (i.e., idle gears).

As illustrated in FIG. 4, the straight-moving actuator 6 includes two pairs of screw feeders 63. Each of the screw feeders 63 includes the feed screw 64 and a nut 65 as a straight-moving element that meshes with the feed screw 64.

An axis F of each feed screw 64 extends substantially in parallel with the first reference axis X. One of the feed screws 64 is non-rotatably coupled to the second gear 62b of the first gear train 62. The other feed screw 64 is non-rotatably coupled to the sixth gear 62f of the first gear train 62. That is, the two feed screws 64 rotate about the axis F integrally with the second gear 62b and the sixth gear 62f, respectively.

Each nut 65 meshes with the feed screw 64. The nut 65 is housed in the gear box 72. The rotation of the nut 65 is stopped by the gear box 72 such that the nut 65 does not rotate about the axis F. Each nut 65 includes a cylindrical body 65a and a flange 65b fixed to the flange body 65a.

The nut 65 is elastically pressed against the gear box 72 by the first buffers10 in the direction of the axis F, that is, in the direction of the first reference axis X. Specifically, the first buffers 10 are springs. More specifically, the first buffers 10 are coil springs. In FIG. 4 the first buffers 10 are simplified. Each first buffer 10 is located on the advancing side of the flange 65b in the direction of the first reference axis X. The first buffer 10 is compressed between the flange 65b and the gear box 72. The first buffer 10 presses the gear box 72 by an elastic force to the advancing side in the direction of the first reference axis X. The gear box 72 is pressed against the nut 65 to the advancing side in the direction of the first reference axis X. Accordingly, when the nut 65 moves in the direction of the axis F, the gear box 72 moves in the direction of the axis F, that is, in the direction of the first reference axis X, integrally with the nut 65.

The gear box 72 is supported by linear guides 28 illustrated in FIG. 3 to be movable in the direction of the first reference axis X. FIG. 3 does not show the gear box 72. The hand body 2 includes two linear guides 28 extending in the direction of the first reference axis X. Since the gear box 72 is supported by the linear guides 28, the gear box 72 cannot rotate about the first reference axis X. In addition, as illustrated in FIG, 4, the rotation shaft 71 is coupled to the gear box 72 to be rotatable about the first reference axis X and immovable in the direction of the first reference axis X. When the gear box 72 moves in the direction of the first reference axis X, the rotation shaft 71 also moves in the direction of the first reference axis X together with the gear box 72.

The rotation actuator 7 includes a second motor 61 that generates a driving force, and the rotation shaft 71 extending along the first reference axis X serving as a center axis of the rotation shaft 71 and rotatable about the first reference axis X by a driving force of the second motor 61. The rotation actuator 7 further includes the first gear train 62 that transfers a driving force of the second motor 61, the gear box 72, and a second gear train 73 that further transfers the driving force of the second motor 61 from the first gear train 62 to the rotation shaft 71. That is, the second motor 61, the first gear train 62, the rotation shaft 71, and the gear box 72 of the rotation actuator 7 are shared with the straight-moving actuator 6. The second motor 61 is an example of a rotational driving source.

As illustrated in FIG. 5, the second gear train 73 includes a first gear 73a and a second gear 73b. The first gear 73a and the second gear 73b mesh with each other.

The first gear 73a is coupled to the fourth gear 62d of the first gear train 62 through a ball spline 73c. An axis G of the ball spline 73c is substantially parallel to the first reference axis X. The ball spline 73c is non-rotatably coupled to the fourth gear 62d. That is, the ball spline 73c rotates about the axis G integrally with the fourth gear 62d.

The first gear 73a is coupled to the ball spline 73c to be non-rotatable about the axis G and movable in the direction of the axis G. In addition, the first gear 73a is supported by the gear box 72 to be immovable in the direction of the axis G and rotatable about the axis G. That is, when the ball spline 73c rotates about the axis G, the first gear 73a rotates about the axis G relative to the gear box 72 integrally with the ball spline 73c. In a case where the gear box 72 moves in the direction of the first reference axis X, that is, in the direction of the axis G, the first gear 73a also moves in the direction of the axis G integrally with the gear box 72. Even when the position of the first gear 73a in the direction of the axis G changes, the first gear 73a rotates about the axis G integrally with the ball spline 73c.

The second gear 73b is coupled to the rotation shaft 71 to be non-rotatable about the first reference axis X and immovable in the direction of the first reference axis X. The second gear 73b rotates about the first reference axis X integrally with the rotation shaft 71, and moves in the direction of the first reference axis X integrally with the rotation shaft 71. The second gear 73b is coupled to a portion of the rotation shaft 71 located inside the gear box 72. In a case where the gear box 72 moves in the direction of the first reference axis X, the rotation shaft 71 and the second gear 73b also move in the direction of the first reference axis X together with the gear box 72. At this time, meshing between the first gear 73a and the second gear 73b is maintained.

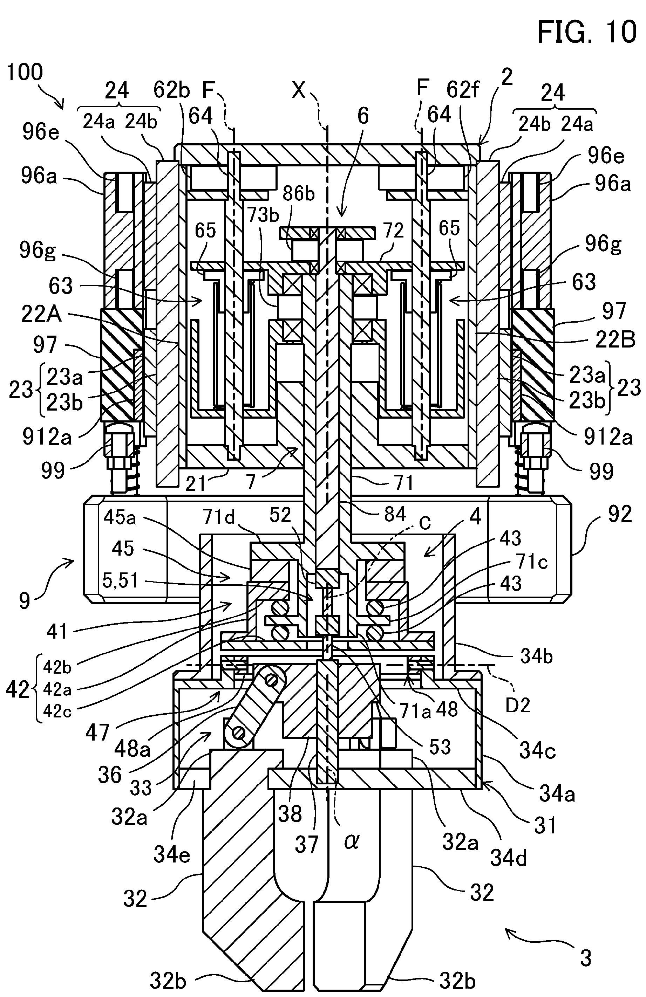

An action of the straight-moving actuator 6 and the rotation actuator 7 thus configured will be described. FIG. 10 is a cross-sectional view of the hand 100 illustrating a state where the straight-moving actuator 6 has moved the gripper 3 in the direction of the first reference axis X.

When the second motor 61 is driven, a rotation driving force of the second motor 61 is transferred to the two feed screws 64 of the straight-moving actuator 6 and the ball spline 73c of the rotation actuator 7 through the first gear train 62. That is, when the feed screw 64 rotates, the ball spline 73c also rotates.

When each feed screw 64 rotates about the axis F, the nut 65 screwed to the feed screw 64 moves in the direction of the axis F, as illustrated in FIG. 10. When the nut 65 moves in the direction of the axis F, the gear box 72 also moves in the direction of the axis F, that is, in the direction of the first reference axis X. When the gear box 72 moves in the direction of the first reference axis X, the rotation shaft 71 also moves in the direction of the first reference axis X integrally with the gear box 72. At this time, the first gear 73a and the second gear 73b move in the direction of the first reference axis X together with the rotation shaft 71 and the gear box 72, while meshing with each other.

When the ball spline 73c rotates about the axis G, the first gear 73a rotates about the axis G integrally with the ball spline 73c. The rotation of the first gear 73a causes the second gear 73b to rotate about the first reference axis X, and the rotation shaft 71 rotates integrally with the second gear 73b.

In this manner, the rotation shaft 71 moves in the direction of the first reference axis X while rotating about the first reference axis X. The gripper 3 is coupled to the rotation shaft 71 through the coupler 4. Accordingly, the gripper 3 moves in the direction of the first reference axis X together with the rotation shaft 71. In addition, the gripper 3 moves while rotating about the second reference axis α.

### -Opening/closing Actuator-

The opening/closing actuator 8 includes a first motor 81 that generates a driving force, and an opening/closing shaft 84 that extends along the first reference axis X serving as a center axis of the opening/closing shaft 84 and is caused to rotate about the first reference axis X by a driving force of the first motor 81. The opening/closing actuator 8 causes the operator 33 to act to thereby open or close the fingers 32. The opening/closing actuator 8 includes a first belt transfer 85, a second belt transfer 86, and the gear box 72. That is, the gear box 72 of the opening/closing actuator 8 is shared with the straight-moving actuator 6 and the rotation actuator 7. The first motor 81 is an example of an opening/closing driving source.

As illustrated in FIG. 5, the opening/closing shaft 84 has a substantially columnar shape extending along the first reference axis X serving as a center axis of the opening/closing shaft 84. One end of the opening/closing shaft 84 in the direction of the first reference axis X will be referred to as a first end 84a, and the other end in the direction of the first reference axis X will be referred to as a second end 84b. The first end 84a is an end on the advancing side in the direction of the first reference axis X. The second end 84b is an end on the retracting side in the direction of the first reference axis X. The opening/closing shaft 84 is inserted into the rotation shaft 71 to be rotatable about the first reference axis X. The second end 84b projects outward from the second end 71b of the rotation shaft 71.

In addition, the opening/closing shaft 84 is supported by the gear box 72 to be rotatable about the first reference axis X and immovable in the direction of the first reference axis X. Accordingly, when the gear box 72 moves in the direction of the first reference axis X, the opening/closing shaft 84 also moves in the direction of the first reference axis X integrally with the gear box 72. At this time, since the rotation shaft 71 also moves in the direction of the first reference axis X integrally with the gear box 72, relative positions of the rotation shaft 71 and the opening/closing shaft 84 in the direction of the first reference axis X do not change.

The opening/closing shaft 84 is inserted in the rotation shaft 71. Since the rotation shaft 71 is supported by the hand body 2 through the bearing 12, the opening/closing shaft 84 is substantially supported by the hand body 2.

As illustrated in FIG. 3, the first motor 81 is located in the hand body 2. The first motor 81 is located at a position different from the first gear train 62 in the direction of the first reference axis X. The first motor 81 is, for example, a servo motor and includes an encoder. A driver of the first motor 81 includes a current sensor. The first motor 81 is supported by the hand body 2.

As illustrated in FIG. 3, the first belt transfer 85 includes a first pulley 85a, a second pulley 85b, and a timing belt 85c. The first pulley 85a is attached to an output shaft of the first motor 81. As illustrated in FIG. 5, the second pulley 85b is coupled to the ball spline 87. The ball spline 87 includes an axis E substantially parallel to the first reference axis X. The ball spline 87 is supported by the hand body 2 to be rotatable about the axis E. The second pulley 85b is coupled to the ball spline 87 to be non-rotatable about the axis E and immovable in the direction of the axis E. The timing belt 85c is wound around the first pulley 85a and the second pulley 85b. A driving force of the first motor 81 is transferred to the second pulley 85b through the first pulley 85a and the timing belt 85c. The ball spline 87 rotates integrally with the second pulley 85b about the axis E.

As illustrated in FIG. 5, the second belt transfer 86 includes a third pulley 86a, a fourth pulley 86b, and a timing belt 86c. The third pulley 86a is coupled to the ball spline 87 to be non-rotatable about the axis E and movable in the direction of the axis E. The third pulley 86a is supported by the gear box 72 to be rotatable about the axis E and immovable in the direction of the axis E. The fourth pulley 86b is coupled to the opening/closing shaft 84 to be non-rotatable about the first reference axis X and immovable in the direction of the first reference axis X. Specifically, the fourth pulley 86b is coupled to the second end 84b of the opening/closing shaft 84 projecting from the rotation shaft 71. The fourth pulley 86b is supported by the gear box 72 to be rotatable about the first reference axis X and immovable in the direction of the first reference axis X. The timing belt 86c is wound around the third pulley 86a and the fourth pulley 86b. Rotation of the ball spline 87 about the axis E is transferred to the fourth pulley 86b through the third pulley 86a and the timing belt 86c.

In this manner, a driving force of the first motor 81 is transferred to the opening/closing shaft 84 through the first belt transfer 85 and the second belt transfer 86. Accordingly, the opening/closing shaft 84 rotates about the first reference axis X. Since the opening/closing shaft 84 is inserted in the rotation shaft 71 to be rotatable about the first reference axis X, the opening/closing shaft 84 rotates about the first reference axis X independently of the rotation shaft 71. The opening/closing shaft 84 and the second belt transfer 86 are supported by the gear box 72 to be immovable in the direction of the first reference axis X. Thus, while the gear box 72 moves in the direction of the first reference axis X, the opening/closing shaft 84 and the second belt transfer 86 move in the direction of the first reference axis X together with the gear box 72. At this time, the third pulley 86a moves along the ball spline 87 in the direction of the axis E. Even when the opening/closing shaft 84 and the second belt transfer 86 move in the direction of the first reference axis X together with the gear box 72, a driving force of the first motor 81 is transferred to the opening/closing shaft 84 through the first belt transfer 85 and the second belt transfer 86.

As FIG. 5, the coupler 4 includes a power transfer 5 that transfers a driving force of the opening/closing actuator 8 to the gripper 3. The power transfer 5 transfers a driving force of the opening/closing actuator 8 to the gripper 3 with the second reference axis α decentered or tilted with respect to the first reference axis X. The power transfer 5 includes a first coupling 51 that couples the opening/closing shaft 84 and the operator 33 to each other. Specifically, the first coupling 51 couples the opening/closing shaft 84 to the operator 33 of the gripper 3.

The first coupling 51 transfers rotation of the opening/closing shaft 84 to the operator 33, that is, the gripper 3, with the second reference axis α decentered or tilted with respect to the first reference axis X. The first coupling 51 is a coupling that transfers rotation even when two axes have displacement such as angular misalignment or decentering. Specifically, the first coupling 51 includes a first ball coupling 52 and a second ball coupling 53. The first ball coupling 52 and the second ball coupling 53 are simplified in the drawings. Each of the first ball coupling 52 and the second ball coupling 53 is a coupling having both functions as a universal joint (i.e., universal coupling) and a spline, and transfers rotation even when a shift such as angular misalignment or decentering occurs between two axes.

The first ball coupling 52 couples the first end 84a of the opening/closing shaft 84 and the second ball coupling 53. The first ball coupling 52 transfers rotation of the opening/closing shaft 84 about the first reference axis X to the second ball coupling 53. The second ball coupling 53 couples the first ball coupling 52 and the feed screw 37 of the operator 33. The second ball coupling 53 transfers rotation of the first ball coupling 52 to the feed screw 37 as rotation about the second reference axis α.

Even when the second reference axis α is decentered or tilted with respect to the first reference axis X, the first ball coupling 52 and the second ball coupling 53 absorb decentering and angular misalignment between the first reference axis X and the second reference axis α and transfers rotation about the first reference axis X as rotation about the second reference axis α.

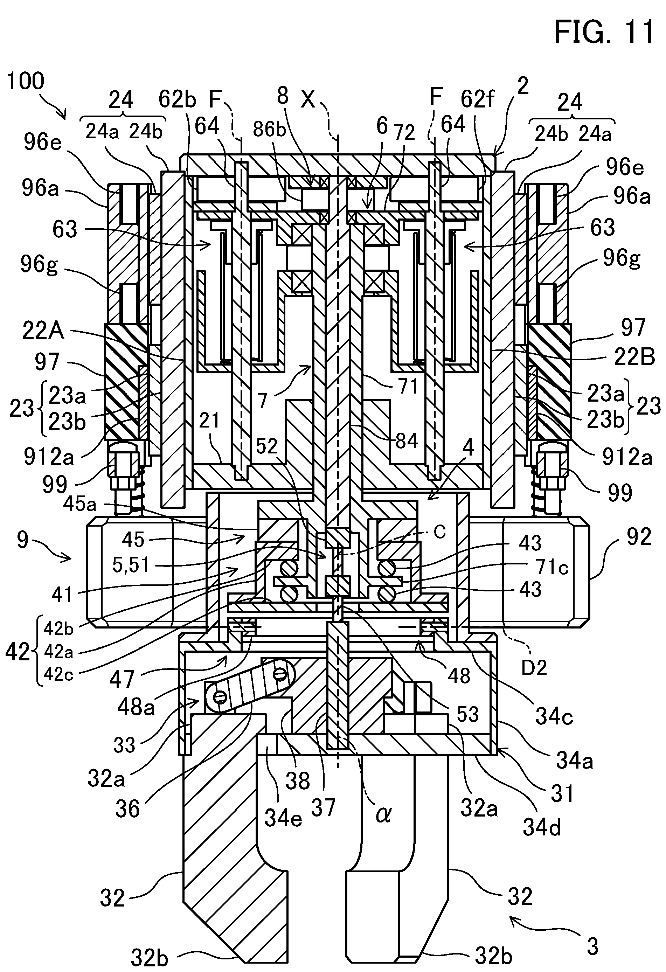

Actions of the opening/closing actuator 8 and the power transfer 5 thus configured will be described. FIG. 11 is a cross-sectional view of the hand 100 illustrating a state where the opening/closing actuator 8 causes the fingers 32 to perform an opening action. In FIG. 11, the gripper 3 is retracted in the direction of the first reference axis X.

When the first motor 81 operates, a rotation driving force of the first motor 81 is transferred to the ball spline 87 through the first pulley 85a, the timing belt 85c, and the second pulley 85b, as illustrated in FIGS. 3 and 5. When the ball spline 87 rotates about the axis E, the third pulley 86a coupled to the ball spline 87 rotates about the axis E. Rotation of the third pulley 86a is transferred to the opening/closing shaft 84 through the timing belt 86c and the fourth pulley 86b. In this manner, the opening/closing shaft 84 rotates about the first reference axis X. Rotation of the opening/closing shaft 84 about the first reference axis X is transferred to the feed screw 37 of operator 33 as rotation about the second reference axis α through the power transfer 5. When the feed screw 37 rotates about the second reference axis α, the block 38 moves in the direction of the second reference axis α. At this time, as illustrated in FIG. 11, when the block 38 approaches the bottom 34c, the fingers 32 move radially outward about the second reference axis α. On the other hand, as illustrated in FIG. 4, when the block 38 moves away from the bottom 34c, the fingers 32 move radially inward. In this manner, the opening/closing actuator 8 opens and closes the fingers 32. Accordingly, the fingers 32 grip a workpiece and release gripping of the workpiece. At this time, the fingers 32 open or close such that the distances from the second reference axis α are the same. That is, the fingers 32 open and close about the second reference axis α.

The direction of movement of the block 38 in the direction of the second reference axis α, that is, whether the fingers 32 open or close, is switched depending on the rotation direction of the first motor 81. The position of the fingers 32 in the radial direction about the second reference axis α, that is, the degree of opening/closing of the fingers 32, is detected based on an encoder output of the first motor 81. In addition, a rotation torque of the first motor 81 in opening or closing of the three fingers 32 is detected based on a detection result of the current sensor.

When the straight-moving actuator 6 moves the rotation shaft 71 and the gripper 3 in the direction of the first reference axis X, the opening/closing shaft 84 and the second belt transfer 86 supported by the gear box 72 also move in the direction of the first reference axis X together with the rotation shaft 71. A driving force of the first motor 81 is kept in a state where the driving force can be transferred to the opening/closing shaft 84 through the first belt transfer 85 and the second belt transfer 86. That is, even when the rotation shaft 71 and the gripper 3 move in the direction of the first reference axis X, the fingers 32 of the gripper 3 can be opened or closed by the driving force of the first motor 81.

It should be noted that while the rotation shaft 71 and the gripper 3 are moved in the direction of the first reference axis X by the straight-moving actuator 6, the gripper 3 is rotated about the first reference axis X by the rotation actuator 7. That is, the base 31 and the fingers 32 rotate about the first reference axis X. At this time, unless the opening/closing shaft 84 rotates about the first reference axis X, the feed screw 37 does not rotate about the first reference axis X, either. Thus, the base 31 rotates about the first reference axis X with respect to the feed screw 37. Consequently, the block 38 moves in the direction of the second reference axis α and the opening/closing state of the fingers 32 changes.

In view of this, in a case where the rotation shaft 71 moves in the direction of the first reference axis X and the opening/closing state of the fingers 32 is maintained, the first motor 81 rotates the opening/closing shaft 84 about the first reference axis X in conformity with rotation of the gripper 3 about the first reference axis X. Specifically, the first motor 81 is subjected to torque control so that a torque of the first motor 81 is controlled to be kept uniform. Accordingly, the fingers 32 move in the direction of the first reference axis X, while rotating about the first reference axis X with the opening/closing state maintained (e.g., a state where the fingers 32 grip a workpiece maintained).

In addition, since the gripper 3 is supported by the coupler 4, the second reference axis α of the gripper 3 is capable of being decentered with respect to the first reference axis X, as illustrated in FIG. 8. Alternatively, the second reference axis α of the gripper 3 is capable of being tilted with respect to the first reference axis X, as illustrated in FIG. 9. Even in such cases, the first ball coupling 52 and the second ball coupling 53 are deformed so that the state where the opening/closing shaft 84 and the operator 33 are coupled is thereby maintained. Furthermore, rotation of the opening/closing shaft 84 about the first reference axis X is transferred to the operator 33 as rotation about the second reference axis α through the first ball coupling 52 and the second ball coupling 53. In this example, since the first coupling 51 includes two couplings, that is, the first ball coupling 52 and the second ball coupling 53, the first coupling 51 can be flexibly used for decentering and tilting between the first reference axis X and the second reference axis α.

### -First Buffer-

The first buffers 10 elastically support the gripper 3 in the direction of the first reference axis X. The first buffers 10 absorb a force exerted on the gripper 3 in the direction of the first reference axis X by elastic support by the gripper 3.

As described above, the first buffers 10 are springs. As illustrated in FIG. 4, each of the first buffers 10 elastically couples the nut 65 of the screw feeder 63 and the gear box 72 to each other. Since the hand 100 includes the two screw feeders 63, the hand 100 includes two first buffers 10. Specifically, each first buffer 10 is housed in the gear box 72. The first buffer 10 elastically couples the nut 65 and the gear box 72 to each other such that the gear box 72 is deformable to the retracting side with respect to the nut 65 in the direction of the first reference axis X. The opening/closing shaft 84 and the rotation shaft 71 are coupled to the gear box 72. The gripper 3 is coupled to the opening/closing shaft 84 and the rotation shaft 71 through the coupler 4. That is, the first buffers 10 substantially support the gripper 3 such that the gripper 3 is deformable to the retracting side in the direction of the first reference axis X.

In these first buffers 10, when a force is exerted on the gripper 3 (e.g., the fingers 32) to the retracting side in the direction of the first reference axis X, this force is transferred from the gripper 3 to the nuts 65 through the coupler 4, the rotation shaft 71, the gear box 72, and the first buffers 10. At this time, the first buffers 10 are elastic deformed, that is, compressively deformed, and the gear box 72 moves to the retracting side in the direction of the first reference axis X. The opening/closing shaft 84, the rotation shaft 71, and the gripper 3 also move to the retracting side in the direction of the first reference axis X integrally with the gear box 72. In this manner, a force exerted on the gripper 3 is absorbed by the first buffers 10.

### -Lock-

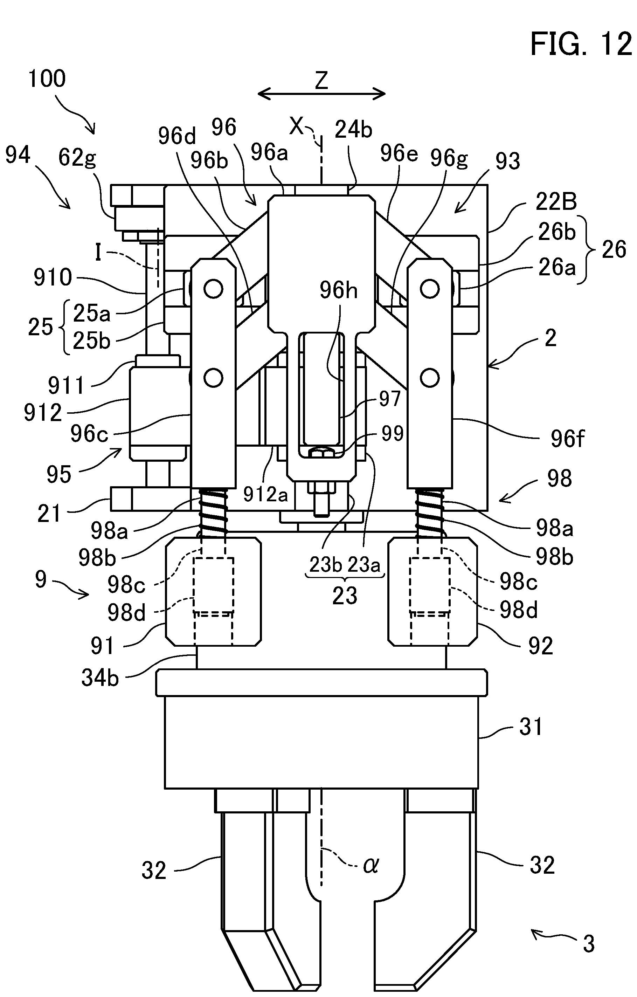

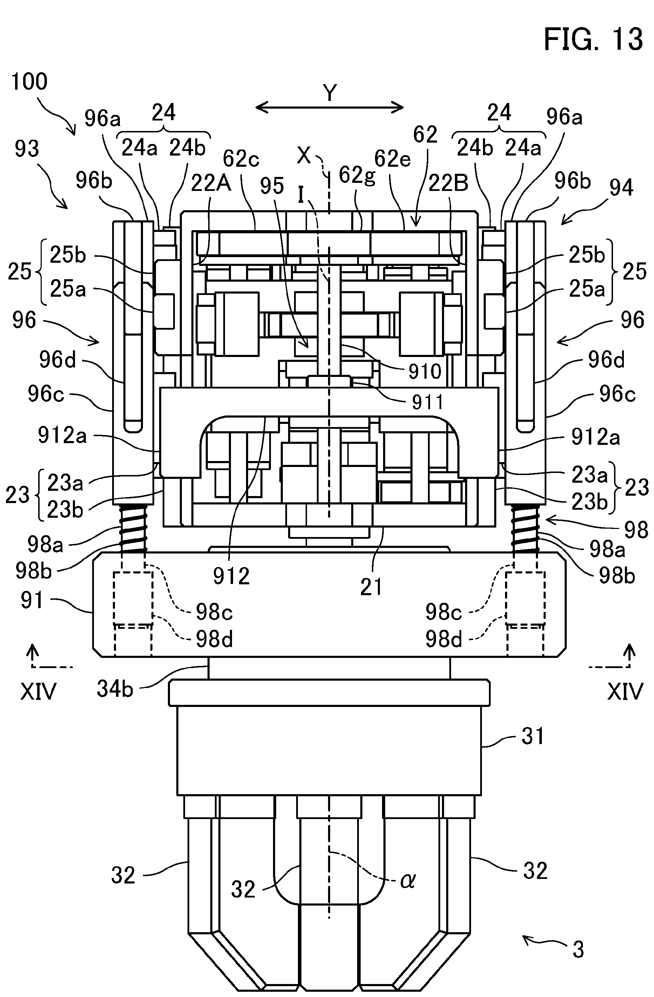

FIG. 12 is a side view of the hand 100. FIG. 13 is a front view of the hand 100. The lock 9 includes transfer rubber 97 and locks movement of the coupler 4 by elastically retaining the gripper 3 in the locked state. In this example, the lock 9 locks movement of the coupler 4 with the first reference axis X and the second reference axis α alighted in a straight line. For convenience description, a Y axis and a Z axis substantially orthogonal to the first reference axis X are defined. The Y axis and the Z axis are substantially orthogonal to each other. That is, the first reference axis X, the Y axis, and the Z axis define three orthogonal axes.

The lock 9 includes a first holder 91 and a second holder 92 that contact the gripper 3 in the locked state, and the lock actuator 93 that causes the first holder 91 and the second holder 92 to perform an opening/closing action. The first holder 91 and the second holder 92 switch between contact with the gripper 3 and separation from the gripper 3 by performing the opening/closing action. The first holder 91 and the second holder 92 perform the opening/closing action in a direction intersecting with the direction of the first reference axis X. In this example, the first holder 91 and the second holder 92 performs the opening/closing action by moving in a direction substantially orthogonal to the direction of the first reference axis X. More specifically, the first holder 91 and the second holder 92 open and close in a direction substantially parallel to the Z axis. The opening/closing direction of the first holder 91 and the second holder 92 will be hereinafter referred to as an "opening/closing direction Z." The lock 9 elastically retains the gripper 3 in the opening/closing direction Z of the first holder 91 and the second holder 92 through an elastic force of the transfer rubber 97. That is, the gripper 3 retained by the lock 9 in the locked state is allowed to be displaced in the opening/closing direction Z of the first holder 91 and the second holder 92 by elastic deformation of the transfer rubber 97.

In addition, the lock 9 includes a second buffer 98 that elasticity supports the first holder 91 and the second holder 92 in the direction of the first reference axis X. That is, the first holder 91 and the second holder 92 are displaceable in the direction of the first reference axis X by the second buffer 98. As a result, the gripper 3 retained by the lock 9 in the locked state can be displaced in the direction of the first reference axis X by the action of the second buffer 98. The second buffer 98 is an example of a buffer.

The lock 9 will be described in detail hereinafter. As illustrated in FIG. 12, the first holder 91 and the second holder 92 face each other with the first reference axis X sandwiched therebetween. The first holder 91 and the second holder 92 are located outside the gripper 3 in the opening/closing direction Z. The first holder 91 and the second holder 92 are located closer to the distal side than the bottom 21 in the direction of the first reference axis X. Each of the first holder 91 and the second holder 92 extends substantially in the Y-axis direction. The first holder 91 and the second holder 92 open or close to change the interval therebetween, specifically the interval in the opening/closing direction Z. The first holder 91 and the second holder 92 retain the gripper 3 by sandwiching the gripper 3 from the outer sides.

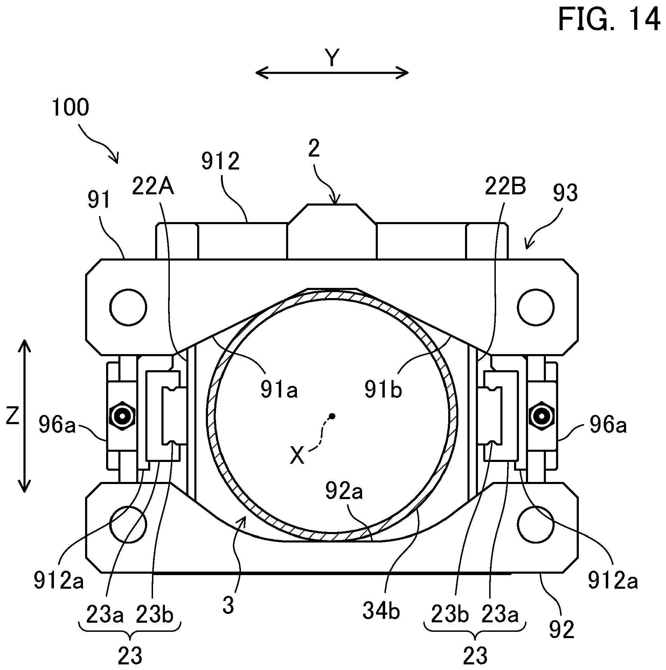

FIG. 14 is a cross-sectional view of the hand 100 taken along line XIV-XIV in FIG. 13. FIG. 14 does not show the inside of the gripper 3, that is, the coupler 4. The first holder 91 are in contact with the gripper 3 at at least two points in the contact state. The second holder 92 are in contact with the gripper 3 at one point in the contact state. Specifically, the first holder 91 has a first contact surface 91a and a second contact surface 91b that contact the gripper 3. The first contact surface 91a and the second contact surface 91b are substantially flat surfaces. The normal direction to the first contact surface 91a and the normal direction to the second contact surface 91b intersect with each other. That is, first contact surface 91a and the second contact surface 91b are neither parallel to each other nor the same plane. The second holder 92 has a third contact surface 92a that contacts the gripper 3. The third contact surface 92a is substantially flat. The first contact surface 91a, the second contact surface 91b, and the third contact surface 92a are in point or line contact with the second cylinder 34b of the gripper 3. Each of the first contact surface 91a, the second contact surface 91b, and the third contact surface 92a may be flat or curved.

The lock actuator 93 includes the second motor 61 that generates a driving force, and a lock transfer 94 that connects the second motor 61 to the first holder 91 and the second holder 92 and transfers the driving force of the second motor 61 to the first holder 91 and the second holder 92. The second motor 61 is an example of a lock driving source. In this example, some elements are shared by the lock actuator 93 and the straight-moving actuator 6.

The transfer rubber 97 is included in the lock transfer 94. Specifically, the lock transfer 94 includes a first transfer 95 that receives a driving force from the second motor 61, a second transfer 96 that transfers the driving force to the first holder 91 and the second holder 92, and the transfer rubber 97 that elastically couples the first transfer 95 and the second transfer 96 to each other. The transfer rubber 97 is an example of the first elastic structure.

As illustrated in FIG. 13, the first transfer 95 includes the first gear train 62 that transfers the driving force (i.e., rotation torque) of the second motor 61, the feed screw 910 extending substantially in parallel with the first reference axis X, a block 911 screwed to the feed screw 910, and an arm 912 attached to the block 911.

As illustrated in FIG. 3, the first gear train 62 includes the seventh gear 62g. The seventh gear 62g receives the driving force of the second motor 61 through the first gear 62a, the second gear 62b, the third gear 62c, and the fourth gear 62d.

As illustrated in FIG. 13 an axis I of the feed screw 910 extends substantially in parallel with the first reference axis X. The feed screw 910 is non-rotatably coupled to the seventh gear 62g of the first gear train 62. The feed screw 910 rotates about the axis I integrally with the seventh gear 62g. The feed screw 910 is supported by the bottom 21 to be rotatable about the axis I.

The block 911 is screwed to the feed screw 910. The feed screw 910 and the block 911 define a screw feeder.

The arm 912 is fixed to the block 911. The arm 912 is non-rotatable about the axis I. Specifically, the arm 912 extends from the block 911 to both sides in a direction intersecting with the axis I. The arm 912 is supported by the hand body 2 to be movable in the direction of the first reference axis X. Specifically, as illustrated in FIG. 13, the arm 912 extends from the axis I to both sides in the Y-axis direction. Both ends 912a of the arm 912 in the extension direction are bent from the Y-axis direction to the opening/closing direction Z, as illustrated in FIG. 12. The both ends 912a of the arm 912 are attached to a pair of first guides 23. The pair of first guides 23 are located at positions facing each other with the first reference axis X sandwiched therebetween. Specifically, as illustrated in FIGS. 13 and 14, the hand body 2 includes two side walls 22A and 22B facing each other with the first reference axis X sandwiched therebetween. The side wall 22A and the side wall 22B are substantially orthogonal to the Y-axis direction. The pair of first guides 23 are respectively located on the side walls 22A and 22B. The first guide 23 includes a block 23a to which the arm 912, specifically the end portion 912a, is attached, and a rail 23b that guides the block 23a in the direction of the first reference axis X. The arm 912 moves in parallel, that is, moves without change in posture, in the direction of the first reference axis X by movement of the block 23a along the rail 23b in the direction of the first reference axis X. The arm 912 is movable only in the direction of the first reference axis X.

The arm 912 is attached to the first guide 23 to be thereby non-rotatable about the axis I. Accordingly, the block 911 is also non-rotatable about the axis I. That is, the block 911 and the arm 912 are rotatable about the axis I with respect to the feed screw 910, while being non-rotatable about the axis I with respect to the hand body 2. Consequently, when the feed screw 910 rotates about the axis I, the block 911 and the arm 912 do not rotate about the axis I and moves in the direction of the axis I, that is, in the direction of the first reference axis X.

As illustrated in FIGS. 12 and 13, the second transfer 96 serves as a linkage. The first holder 91 and the second holder 92 are coupled to the second transfer 96. The lock transfer 94 includes a pair of second transfers 96. The pair of second transfers 96 are located at positions facing each other with the first reference axis X sandwiched therebetween. The pair of second transfers 96 are located at positions corresponding to the pair of first guides 23. Specifically, the pair of second transfers 96 are respectively located on the two side walls 22A and 22B of the hand body 2. The second transfer 96 on the side wall 22A and the second transfer 96 on the side wall 22B are symmetrically reversed left and right with respect to the first link 96a. In other respects, the pair of second transfers 96 have the same structure. The first holder 91 is coupled to each of the pair of second transfers 96. The second holder 92 is coupled to each of the pair of second transfers 96.

The second transfer 96 includes the first link 96a, a second link 96b, a third link 96c, a fourth link 96d, a fifth link 96e, a sixth link 96f, and a seventh link 96g. The first link 96a, the second link 96b, the third link 96c, and the fourth link 96d serve as a four-bar link. The first link 96a, the fifth link 96e, the sixth link 96f, and the seventh link 96g serve as another four-bar link. That is, the first link 96a is common to one four-bar link and the other four-bar link.

Specifically, one end of the second link 96b is rotatably coupled to the first link 96a, and the other end of the second link 96b is rotatably coupled to the third link 96c. One end of the fourth link 96d is rotatably coupled to the first link 96a, and the other end of the fourth link 96d is rotatably coupled to the third link 96c. One end of the fifth link 96e is rotatably coupled to the first link 96a, and the other end of the fifth link 96e is rotatably coupled to the sixth link 96f. One end of the seventh link 96g is rotatably coupled to the first link 96a, and the other end of the seventh link 96g is rotatably coupled to the sixth link 96f. The first link 96a, the third link 96c, and the sixth link 96f extend substantially in parallel with the first reference axis X. The first link 96a is located between the third link 96c and the sixth link 96f.

The first link 96a is a link to which a driving force from the first transfer 95 is input. The first link 96a is supported by the hand body 2 to be movable in the direction of the first reference axis X. Specifically, as illustrated in FIG. 13, the first link 96a is attached to second guides 24. The pair of second guides 24 are respectively located on the two opposed side walls 22A and 22B of the hand body 2. Each of the second guides 24 includes a block 24a to which the first link 96a is attached, and a rail 24b that guides the block 24a in the direction of the first reference axis X. The rail 24b is integrated with the rail 23b of the first guide 23. That is, the rail 23b and the rail 24b are the common rail. The first link 96a moves in parallel, that is, moves without change in posture, in the direction of the first reference axis X by movement of the block 24a along the rail 23b in the direction of the first reference axis X. The first link 96a is movable only in the direction of the first reference axis X.

As illustrated in FIGS. 12 and 13, the third link 96c is a link that transfers a driving force to the first holder 91. The third link 96c is supported by the hand body 2 to be movable in the opening/closing direction Z. Specifically, the third link 96c is attached to third guides 25. The pair of third guides 25 are respectively located on the two opposed side walls 22A and 22B of the hand body 2. Each of the third guides 25 includes a block 25a to which the third link 96c is attached, and a rail 25b that guides the block 25a in the opening/closing direction Z. The third link 96c moves in parallel, that is, moves without change in posture, in the opening/closing direction Z by movement of the block 25a along the rail 25b in the opening/closing direction Z. The third link 96c is movable only in the opening/closing direction Z.

The sixth link 96f is a link that transfers a driving force to the second holder 92. The sixth link 96f is supported by the hand body 2 to be movable in the opening/closing direction Z. Specifically, the sixth link 96f is attached to fourth guides 26. The pair of fourth guides 26 are respectively located on the two opposed side walls 22A and 22B of the hand body 2. Each of the fourth guides 26 includes a block 26a to which the sixth link 96f is attached, and a rail 26b that guides the block 26a in the opening/closing direction Z. The sixth link 96f moves in parallel, that is, moves without change in posture, in the opening/closing direction Z by movement of the block 26a along the rail 26b in the opening/closing direction Z. The sixth link 96f is movable only in the opening/closing direction Z.

The arm 912 is coupled to the first link 96a. Specifically, the arm 912 is coupled to the first link 96a through the transfer rubber 97. As illustrated in FIG. 12, the transfer rubber 97 is attached to the arm 912, specifically the end portions 912a of the arm 912. The transfer rubber 97 is located inside an engagement hole 96h in the first link 96a. When the arm 912 moves in the direction of the first reference axis X, the transfer rubber 97 moves in the direction of the first reference axis X integrally with the arm 912 and presses the first link 96a in the direction of the first reference axis X. **In** this manner, the driving force is transferred from the arm 912 to the first link 96a through the transfer rubber 97.

The first link 96a includes a bolt 99 that adjusts a dimension of the engagement hole 96h in the direction of the first reference axis X. The bolt 99 penetrates the first link 96a in the direction of the first reference axis X, and is partially located inside the engagement hole 96h. In this example, a bolt head is located inside the engagement hole 96h. The bolt head of the bolt 99 is located at one end in the engagement hole 96h in the direction of the first reference axis X. That is, in the direction of the first reference axis X, the transfer rubber 97 and the bolt head of the bolt 99 are aligned. One end of the transfer rubber 97 located inside the engagement hole 96h in the direction of the first reference axis X contacts the inner peripheral surface of the engagement hole 96h. The other end of the transfer rubber 97 in the direction of the first reference axis X contacts the bolt head of the bolt 99.

The insertion depth of the bolt 99 into the first link 96a is adjusted so that the position of the bolt 99 in the engagement hole 96h in the direction of the first reference axis X is thereby adjusted. The distance between the inner peripheral surface of the engagement hole 96h and the bolt 99 in the direction of the first reference axis X is a substantial dimension of the engagement hole 96h in the direction of the first reference axis X. When the bolt 99 moves in the direction of the first reference axis X in the engagement hole 96h inward, the substantial dimension of the engagement hole 96h in the direction of the first reference axis X decreases. On the other hand, when the bolt 99 moves outward in the direction of the first reference axis X in the engagement hole 96h, the substantial dimension of the engagement hole 96h in the direction of the first reference axis X increases.

In a case where a dimension of the transfer rubber 97 in the direction of the first reference axis X is larger than the distance between the inner peripheral surface of the engagement hole 96h and the bolt 99 in the direction of the first reference axis X, one end of the transfer rubber 97 in the direction of the first reference axis X contacts the inner peripheral surface of the engagement hole 96h, and the other end of the transfer rubber 97 in the direction of the first reference axis X contacts the bolt 99. In this state, when the insertion depth of the bolt 99 is adjusted, the compressive deformation amount of the transfer rubber 97 in the direction of the first reference axis X changes. As the compressive deformation amount of the transfer rubber 97 increases, it becomes harder for the transfer rubber 97 to be further deformed by compression. That is, when the compressive deformation amount of the transfer rubber 97 changes, substantial rigidity of the transfer rubber 97 changes. The substantial rigidity of the transfer rubber 97 herein is not rigidity in a natural state of the transfer rubber 97, that is, rigidity without exertion of an external force, and refers to rigidity in a state where the transfer rubber 97 couples the arm 912 and the first link 96a.

Alternatively, in a state where the dimension of the transfer rubber 97 in the direction of the first reference axis X is smaller than the distance between the inner peripheral surface of the engagement hole 96h and the bolt 99 and the bolt 99 in the direction of the first reference axis X, the transfer rubber 97 can move in the direction of the first reference axis X in the engagement hole 96h. Accordingly, with respect to movement of the arm 912 in the direction of the first reference axis X, movement of the first link 96a in the direction of the first reference axis X can be delayed. For example, in movement of the transfer rubber 97 from the state of contacting the bolt 99 to a side opposite to the direction of the first reference axis X, the transfer rubber 97 moves slightly in the engagement hole 96h and then is brought into contact with the inner peripheral surface of the engagement hole 96h. That is, even when the transfer rubber 97 moves, the first link 96a does not move immediately. By adjusting the insertion depth of the bolt 99, the amount of such a delay of movement of the first link 96a from movement of the arm 912 is adjusted.

The first holder 91 is coupled to the third link 96c. The first holder 91 is coupled to each of the third link 96c of one second transfer 96 and the third link 96c of the other second transfer 96. The second holder 92 is coupled to the sixth link 96f. The second holder 92 is coupled to each of the sixth link 96f of one second transfer 96 and the sixth link 96f of the other second transfer 96. Specifically, the first holder 91 and the second holder 92 are coupled to the third link 96c and the sixth link 96f through the second buffer 98.

The second buffer 98 includes guides 98a that guide the first holder 91 and the second holder 92 such that the first holder 91 and the second holder 92 are displaceable in the direction of the first reference axis X, and second springs 98b that elastically supports the first holder 91 and the second holder 92 along the guides 98a. The second springs 98b is an example of a second elastic structure.

In this example, the second buffer 98 includes the four guides 98a and four second springs 98b. One guide 98a is used for each of the two third links 96c and the two sixth links 96f. Specifically, one guide 98a is located on one end, specifically, an end closer to the gripper 3 in the direction of the first reference axis X, of each of the third links 96c. One guide 98a is located on one end, specifically an end closer to the gripper 3 in the direction of the first reference axis X, of each of the sixth links 96f. All the guides 98a have the same structure. For example, the guides 98a are ball splines. Each of the guides 98a includes a spline shaft 98c and an outer cylinder 98d fitted in the spline shaft 98c. In the guide 98a corresponding to the first holder 91, the spline shaft 98c is attached to the third link 96c, and the outer cylinder 98d is attached to the first holder 91. In the guide 98a corresponding to the second holder 92, the spline shaft 98c is attached to the sixth link 96f, and the outer cylinder 98d is attached to the second holder 92. The spline shaft 98c extends in the direction of the first reference axis X. A ball is located between the spline shaft 98c and the outer cylinder 98d. Accordingly, the outer cylinder 98d smoothly slides in the direction of the first reference axis X along the spline shaft 98c. A tip of the spline shaft 98c has a stopper for preventing detachment of the outer cylinder 98d.

The second spring 98b is included in each of the guides 98a. For example, the second springs 98b are coil springs. The guides 98a are inserted in the second springs 98b. The second spring 98b corresponding to the first holder 91 is located in a compressed state between the third link 96c and the first holder 91. Accordingly, the second spring 98b biases the first holder 91 toward the tip of the spline shaft 98c by an elastic force. In a normal state, that is, while no external force in the direction of the first reference axis X is exerted on the first holder 91, the first holder 91 is located at a position farthest from the third link 96c in the direction of the first reference axis X. The second spring 98b corresponding to the second holder 92 is located in a compressed state between the sixth link 96f and the second holder 92. Accordingly, the second spring 98b biases the second holder 92 toward the tip of the spline shaft 98c by an elastic force. In a normal state, that is, while no external force in the direction of the first reference axis X is exerted on the second holder 92, the second holder 92 is located at a position farthest from the sixth link 96f in the direction of the first reference axis X.

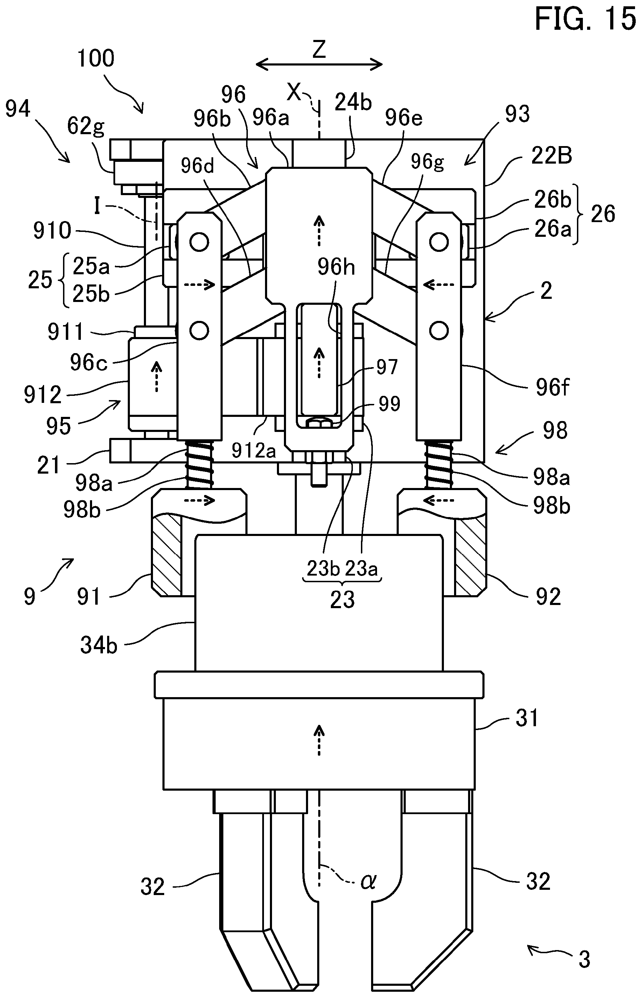

An action of the thus-configured lock 9 will be described. FIG. 15 is a side view of the hand 100 while the lock 9 is in the unlocked state. In FIG. 15, the first holder 91 and the second holder 92 are partially shown in a cross section. Broken arrows in FIG. 15 represent actions of elements of the hand 100 when the lock 9 switches from the unlocked state to the locked state.

First, an action when the lock 9 switches from the unlocked state to the locked state will be described. In the unlocked state of the lock 9, the first holder 91 and the second holder 92 are open and separated from the gripper 3. At this time, the gripper 3 is advanced by the straight-moving actuator 6 from the hand body 2 to the distal side in the direction of the first reference axis X.

When the second motor 61 of the lock actuator 93 operates, a rotation driving force of the second motor 61 is transferred through the first gear train 62 to the feed screw 910. When the feed screw 910 rotates about the axis I, the arm 912 moves in the direction of the axis I, that is, in the direction of the first reference axis X, together with the block 911 screwed to the feed screw 910. At this time, the rotation direction of the second motor 61 is set such that the arm 912 moves to the body side in the direction of the first reference axis X.

When the arm 912 moves to the body side in the direction of the first reference axis X, the first link 96a of the second transfer 96 is pressed by the transfer rubber 97 to move to the body side in the direction of the first reference axis X. When the first link 96a moves to the body side in the direction of the first reference axis X, the third link 96c and the sixth link 96f move to the sides in which the third link 96c and the sixth link 96f are closed in the opening/closing direction Z in conjunction with the movement of the first link 96a. The first holder 91 and the second holder 92 also move to the sides in which the first holder 91 and the second holder 92 are closed in the opening/closing direction Z, together with the third link 96c and the sixth link 96f. The third link 96c, the sixth link 96f, the first holder 91, and the second holder 92 do not move in the direction of the first reference axis X and move only in the opening/closing direction Z.

Since the second motor 61 is also a driving source of the straight-moving actuator 6, when the lock actuator 93 operates, the straight-moving actuator 6 also operates. That is, the gripper 3 moves in the direction of the first reference axis X in conjunction with the opening/closing action of the first holder 91 and the second holder 92. Specifically, when the first holder 91 and the second holder 92 perform a closing action, the gripper 3 moves to the body side in the direction of the first reference axis X. As the first holder 91 and the second holder 92 close in the opening/closing direction Z, the gripper 3 enters deeply between the first holder 91 and the second holder 92 in the direction of the first reference axis X.

Then, the first holder 91 and the second holder 92 eventually contact the second cylinder 34b of the gripper 3. At this time, as illustrated in FIG. 12, the second cylinder 34b has completely entered between the first holder 91 and the second holder 92 in the direction of the first reference axis X. In this manner, the first holder 91 and the second holder 92 sandwich the second cylinder 34b in the opening/closing direction Z to thereby retain the gripper 3.

Here, even when the first holder 91 and the second holder 92 contact the second cylinder 34b, the second motor 61 does not need to stop immediately. The second motor 61 may continue operation to continue movement of the arm 912 to the body side in the direction of the first reference axis X. Since the first holder 91 and the second holder 92 cannot move to the sides in which the first holder 91 and the second holder 92 are closed in the opening/closing direction Z, the first link 96a cannot move to the body side in the direction of the first reference axis X, either. When the arm 912 moves to the body side in the direction of the first reference axis X, the transfer rubber 97 is deformed by compression. Accordingly, retention rigidity of the gripper 3 by the first holder 91 and the second holder 92 is enhanced. In this manner, after the first holder 91 and the second holder 92 have contacted the second cylinder 34b, the arm 912 is further moved to the body side in the direction of the first reference axis X. Accordingly, a pressing force of the transfer rubber 97 against the first link 96a by the arm 912 is adjusted, and as a result, a pressing force of the first holder 91 and the second holder 92 against the gripper 3 is adjusted. Movement of the arm 912 may be stopped immediately after the first holder 91 and the second holder 92 contact the second cylinder 34b, of course.

The first holder 91 and the second holder 92 lock movement of the gripper 3 to thereby lock movement of the decentering coupler 41 and the tilt coupler 47. Specifically, the first holder 91 and the second holder 92 retain the gripper 3 to thereby prevent movement of the gripper 3 in the direction substantially orthogonal to the first reference axis X and movement of the gripper 3 such that the second reference axis α tilts with respect to the first reference axis X. At this time, as illustrated in FIG. 4, the first reference axis X and the second reference axis α are aligned in a straight line. In this manner, the lock 9 locks movement of the decentering coupler 41 and the tilt coupler 47 with the first reference axis X and the second reference axis α aligned in a straight line, by contact of the first holder 91 and the second holder 92 with the gripper 3.

In the locked state of the lock 9, as illustrated in FIG. 14, the first contact surface 91a and the second contact surface 91b of the first holder 91 contact the second cylinder 34b, and the third contact surface 92a of the second holder 92 contacts the second cylinder 34b. That is, the gripper 3 is supported at at least three points by the first holder 91 and the second holder 92. As a result, in the locked state, positioning accuracy of the gripper 3 in a plane substantially orthogonal to the first reference axis X is enhanced.

Next, an action when the lock 9 switches from the locked state to the unlocked state will be described. In the locked state of the lock 9, as illustrated in FIGS. 12, 13, and 14, the first holder 91 and the second holder 92 are closed and in contact with the gripper 3. At this time, the gripper 3 is retracted by the straight-moving actuator 6 toward the hand body 2, and the second cylinder 34b has entered between the first holder 91 and the second holder 92 as a whole in the direction of the first reference axis X. In switching from the locked state to the unlocked state, components of the hand 100 move to the sides opposite to broken arrows in FIG. 15.

When the second motor 61 of the lock actuator 93 operates, a rotation driving force of the second motor 61 is transferred through the first gear train 62 to the feed screw 910. At this time, the rotation direction of the second motor 61 is set to the side opposite to the direction in which the lock 9 is switched to the locked state. When the feed screw 910 rotates about the axis I, the arm 912 moves in the direction of the axis I, that is, to the distal side of the direction of the first reference axis X, together with the block 911 screwed to the feed screw 910.

When the arm 912 moves to the distal side in the direction of the first reference axis X, the first link 96a of the second transfer 96 is pressed by the transfer rubber 97 to move to the distal side in the direction of the first reference axis X. When the first link 96a moves to the distal side in the direction of the first reference axis X, the third link 96c and the sixth link 96f move to the sides in which the third link 96c and the sixth link 96f are opened in the opening/closing direction Z in conjunction with the movement of the first link 96a. The first holder 91 and the second holder 92 also move to the sides in which the first holder 91 and the second holder 92 are opened in the opening/closing direction Z, together with the third link 96c and the sixth link 96f. As a result, the first holder 91 and the second holder 92 are eventually separated from the second cylinder 34b of the gripper 3. The third link 96c, the sixth link 96f, the first holder 91, and the second holder 92 do not move in the direction of the first reference axis X and move only in the opening/closing direction Z.

When the first holder 91 and the second holder 92 are no longer in contact with the second cylinder 34b of the gripper 3, locking of movement of the gripper 3 by the first holder 91 and the second holder 92 is released. Accordingly, locking of movement of the decentering coupler 41 and the tilt coupler 47 is also released. Specifically, the gripper 3 can move in a direction substantially orthogonal to the first reference axis X and the gripper 3 can move such that the second reference axis α tilts with respect to the first reference axis X. In this manner, locking of movement of the gripper 3 by the first holder 91 and the second holder 92 is released, and as a result, locking of movement of the coupler 4 is released.

As described above, the straight-moving actuator 6 also operates in conjunction with the lock actuator 93. The gripper 3 moves in the direction of the first reference axis X in conjunction with the opening/closing action of the first holder 91 and the second holder 92. When the first holder 91 and the second holder 92 perform an opening action, the gripper 3 moves to the distal side in the direction of the first reference axis X. When the gripper 3 starts moving to the distal side from a most retracted position to the body side in the direction of the first reference axis X, the opening action of the first holder 91 and the second holder 92 starts and retention of the gripper 3 is canceled. As the gripper 3 moves away from the first holder 91 and the second holder 92 in the direction of the first reference axis X, the opening degrees of the first holder 91 and the second holder 92 increase.

In the thus-configured lock 9, since the lock transfer 94 includes the transfer rubber 97, the first holder 91 and the second holder 92 in the locked state elastically retain the gripper 3 in the opening/closing direction Z though an elastic force of the transfer rubber 97. Specifically, the position of the arm 912 is fixed in the locked state by the lock 9. The position of the first link 96a depends on the position of the arm 912, but is displaceable relative to the arm 912 by elastic deformation of the transfer rubber 97. Thus, when an external force is exerted on the first holder 91 or the second holder 92 to the sides in which the first holder 91 or the second holder 92 is closed in the opening/closing direction Z, the first link 96a moves in the direction of the first reference axis X, and the first holder 91 and the second holder 92 can move to the sides in which the first holder 91 and the second holder 92 are opened in the opening/closing direction Z. In this manner, the lock 9 allows a certain degree of displacement of the gripper 3 and the coupler 4 in the opening/closing direction Z, while locking movement of the gripper 3 and the coupler 4.

Retention rigidity of the gripper 3 by the lock 9 at this time is adjusted by using the insertion depth of the bolt 99 and a pressing force of the transfer rubber 97 on the first link 96a by the arm 912. As described above, substantial rigidity of the transfer rubber 97 is adjusted by using the insertion depth of the bolt 99. In addition, a pressing force of the first holder 91 and the second holder 92 on the gripper 3 is adjusted by using a pressing force of the transfer rubber 97 on the first link 96a by the arm 912 in the locked state of the lock 9.

Further, the first holder 91 and the second holder 92 are elastically supported by the second buffer 98 in the direction of the first reference axis X. That is, even in the locked state by the lock 9, the first holder 91 and the second holder 92 do not lock relative movement of the hand body 2 and the gripper 3 in the direction of the first reference axis X. Thus, even in the locked state by the lock 9, the first buffers 10 effectively functions.

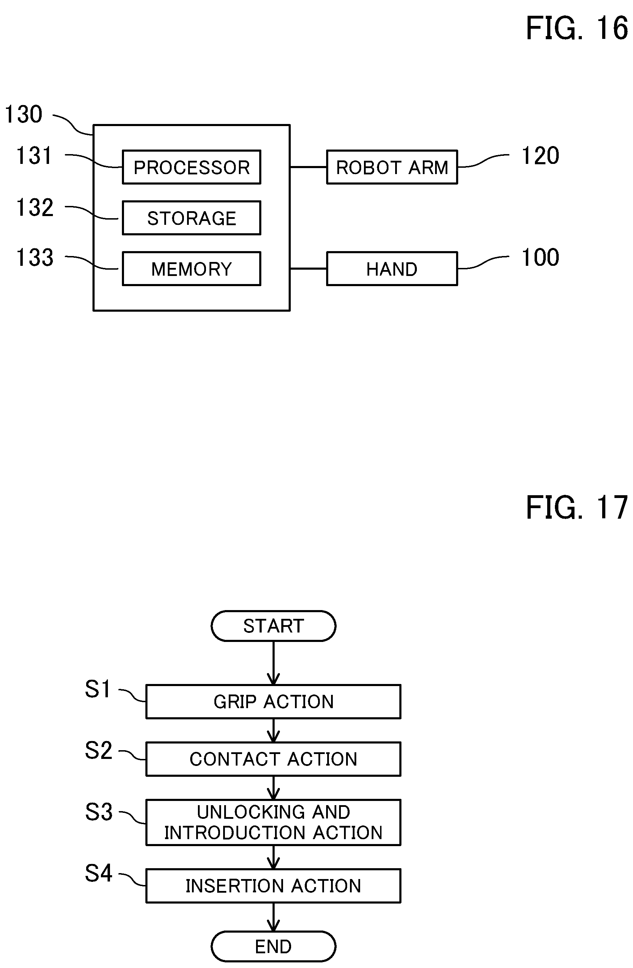

Control of the robot arm 120 and the hand 100 by the controller 130 will now be described. FIG. 16 schematically illustrates a hardware configuration of the controller 130. The controller 130 includes a processor 131, a storage 132, and a memory 133.

The processor 131 performs various functions of the controller 130 by reading and developing programs from the storage 132 to the memory 133. The processor 131 is a processor such as a central processing unit (CPU). The processor 131 may be a unit such as a micro controller unit (MCU), a micro processor unit (MPU), a field programmable gate array (FPGA), a programmable logic controller (PLC), or large scale integrated circuit (system LSI).

The processor 131 controls a motor of the robot arm 120 to thereby control action of the robot arm 120. The processor 131 also controls the first motor 81 and the second motor 61 to thereby control actions of the hand 100.

The storage 132 stores programs and various types of data to be executed by the processor 131. The storage 132 is a device such as a nonvolatile memory hard disc drive (HDD) or a solid state drive (SSD). The memory 133 temporarily stores data and the like. The memory 133 is, for example, a volatile memory.

Specific control by the controller 130 will now be described. Insertion work of inserting a workpiece W1 gripped by the hand 100 into a hole H in another workpiece W2 will be described. The workpiece W1 has a columnar shape extending along an axis M serving a center axis of the workpiece W1. The hole H is a round hole in which the workpiece W1 is fitted. The hole H extends substantially in the vertical direction along an axis N serving as a center axis of the hole H. FIG. 17 is a flowchart of the insertion work.

First, in step S1, the controller 130 causes the robot arm 120 and the hand 100 to perform a grip action of gripping the workpiece W1 with the gripper 3. Specifically, the controller 130 causes the three fingers 32 to open more widely than the outer diameter of the workpiece W1. The controller 130 moves the robot arm 120 such that an end of the workpiece W1 is located on the inner side of the three fingers 32. Then, the controller 130 causes the three fingers 32 to close. Accordingly, the three fingers 32 grip the workpiece W1. At this time, axis M of the workpiece W1 is aligned with the second reference axis α in a straight line. Since the first reference axis X and the second reference axis α are aligned in a straight line, the axis M of the workpiece W1 is also aligned with the first reference axis X in a straight line.

At this time, the controller 130 sets the lock 9 in a locking state. That is, the first holder 91 and the second holder 92 retains the gripper 3, and the gripper 3 is neither decentered nor tilted with respect to the first reference axis X of the hand body 2. Accordingly, the controller 130 accurately positions the gripper 3 in a grip action or its following action.

Alternatively, the controller 130 may perform a grip action in the unlocked state of the lock 9. In this case, since the gripper 3 is allowed to be decentered or tilted with respect to the first reference axis X, the position of the gripper 3 is naturally adjusted such that the gripper 3 can appropriately grip the workpiece W1 without accurate positional adjustment between the gripper 3 and the workpiece W1.

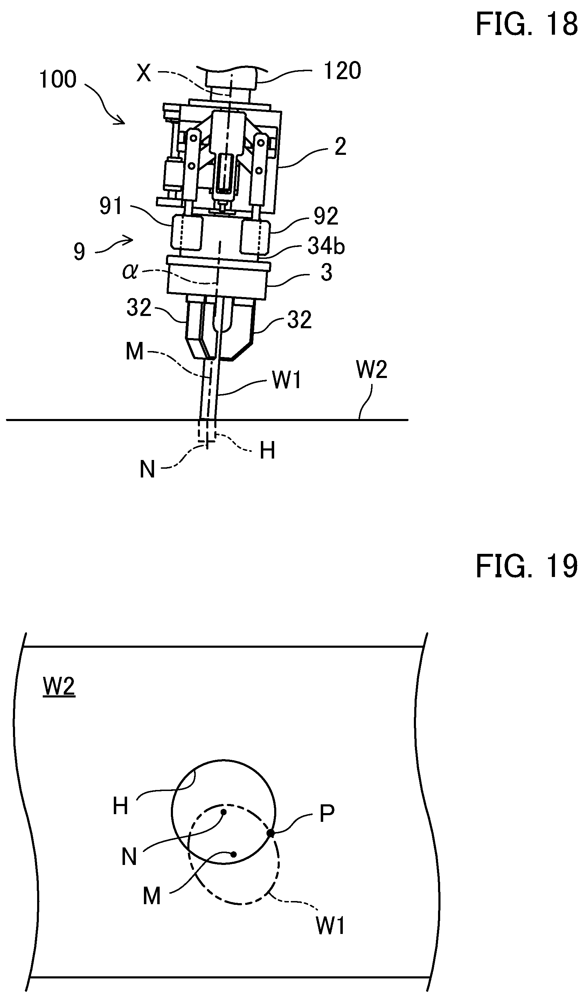

After the gripper 3 has gripped the workpiece W1, the controller 130 causes the robot arm 120 and the hand 100 to perform a contact action of bringing the workpiece W1 into contact with an opening edge of the hole H in step S2. FIG. 18 is a schematic view of the hand 100 seen from the front when the contact action is completed. FIG. 19 is a schematic plan view illustrating a positional relationship between the workpiece W1 and the hole H when the contact action is completed.

Specifically, as illustrated in FIG. 18, the controller 130 moves the robot arm 120 such that the workpiece W1 is brought into contact with the opening edge of the hole H with the first reference axis X and the second reference axis α tilted with respect to the axis N of the hole H. The robot arm 120 brings an edge of an end the workpiece W1 opposite to the end gripped by the fingers 32 into contact with the opening edge of the hole H. Since the axis M of the workpiece W1 is aligned with the second reference axis α in a straight line, the axis M of the workpiece W1 also tilt with respect to the axis N of the hole H.

Since the workpiece W1 has a columnar shape, the edge of the workpiece W1 is circular. Since the hole H is a round hole, the opening edge of the hole H is circular. When the edge of the circular shape of the workpiece W1 contacts the opening edge of the circular shape of the hole H with the axis M of the workpiece W1 tilted with respect to the axis N of the hole H, the workpiece W1 is brought into point contact or line contact with the opening edge of the hole H. In this example, the robot arm 120 changes the axis M to a twisted position with respect to the axis N to thereby bring the workpiece W1 into point contact with the opening edge of the hole H at a point P, as illustrated in FIG. 19.

In the contact action, the lock 9 is in the locking state, and locks the decentering coupler 41 and the tilt coupler 47. Accordingly, the controller 130 accurately performs position adjustment of the gripper 3, that is, position adjustment of the workpiece W1. Since the first buffers 10 also effectively function by the action of the second buffer 98 in the locked state by the lock 9, the first buffers 10 and the second buffer 98 can absorb an impact on the workpiece W1 occurring when the workpiece W1 is brought into contact with the opening edge of the hole H. Accordingly, quick work by the robot arm 120 and the hand 100 can be achieved.

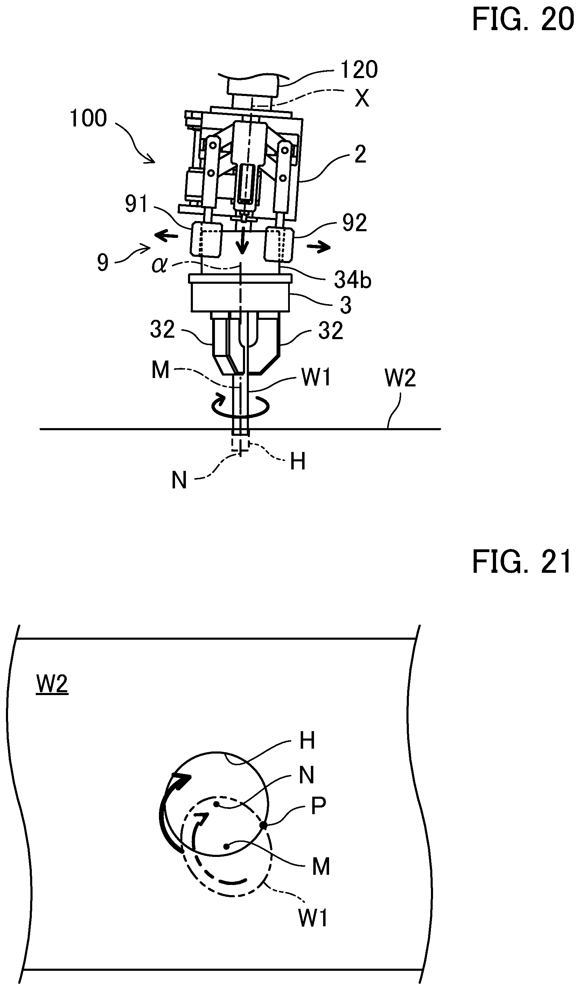

Then, in step S3, the controller 130 causes the hand 100 to perform an unlocking action and an introduction action. The unlocking action is an action of releasing locking of the coupler 4 by the lock 9. The introduction action is an action of partially inserting the workpiece W1 into the hole H by operating the rotation actuator 7 with the first reference axis X tilted with respect to the axis N of the hole H. The hand 100 performs the unlocking action and the introduction action at the same time. FIG. 20 is a schematic view of the hand 100 seen from the front when the introduction action is completed. FIG. 21 is a schematic plan view illustrating a positional relationship between the workpiece W1 and the hole H at start of the introduction action.

Specifically, the controller 130 operates the second motor 61. When the second motor 61 operates, the straight-moving actuator 6, the rotation actuator 7, and the lock actuator 93 operate. The straight-moving actuator 6 moves the gripper 3 to the distal side in the direction of the first reference axis X. The rotation actuator 7 rotates the gripper 3 clockwise when seen in the advancing direction of the gripper 3. The lock actuator 93 opens the first holder 91 and the second holder 92 in the opening/closing direction Z.

Since the lock 9 switches from the locked state to the unlocked state, the coupler 4 becomes movable. The coupler 4 advances in the direction of the first reference axis X while rotating about the first reference axis X. Since the coupler 4 is movable, the gripper 3 moves together with the coupler 4 with the gripper 3 allowed to be freely decentered and tilted with respect to the first reference axis X. As the coupler 4 advances in the direction of the first reference axis X, the distance between the first holder 91 and the second holder 92 in the opening/closing direction Z increases. That is, the movable range of the gripper 3 enlarges.

At this time, as illustrated in FIG. 21, from the state where the workpiece W1 is in point contact with the opening edge of the hole H, the workpiece W1 rotates about the second reference axis α, that is, about the axis M (see the chain double-dashed arrow). As a result, the workpiece W1 pivots about the point P and is guided by the opening edge of the hole H so that an end of the workpiece W1 is fitted in the hole H (see the bold arrow). In this process, the workpiece W1 gradually changes the posture such that the axis M coincides with the axis N of the hole H. Since locking of the coupler 4 by the lock 9 is released, the gripper 3 is allowed to be decentered or tilted with respect to the first reference axis X. That is, the workpiece W1 can change the posture such that the axis M coincides with the axis N, while being gripped by the gripper 3. In addition, the tilt coupler 47 can transfer rotation of the rotation shaft 71 about the first reference axis X to the gripper 3 as rotation about the second reference axis α with the second reference axis α of the gripper 3 tilted with respect to the first reference axis X. Accordingly, the workpiece W1 gradually changes the posture such that the axis M coincides with the axis N, while rotating about the second reference axis α, that is, about the axis M. In this manner, an end of the workpiece W1 is smoothly inserted into the hole H. When the amount of advancement of the coupler 4 in the direction of the first reference axis X from the start of the unlocking action and the introduction action reaches a predetermined amount, the controller 130 completes the unlocking action and the introduction action.

As illustrated in FIG. 20, at the completion of the unlocking action and the introduction action, the second reference axis α of the gripper 3 is tilted with respect to the first reference axis X. The second reference axis α and the axis M of the workpiece W1 are aligned in a straight line with the axis N of the hole H. The position and the posture of the hand body 2 do not change from the start of the unlocking action and the introduction action.

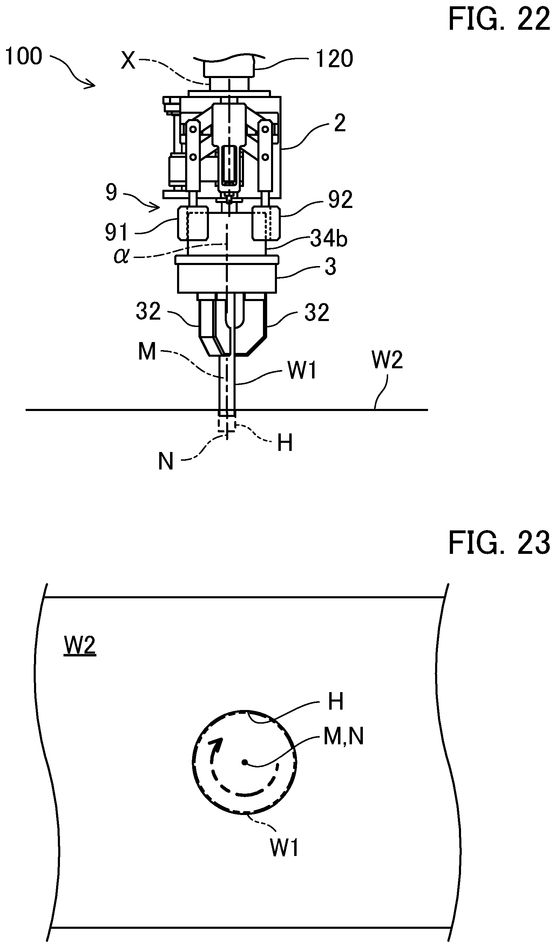

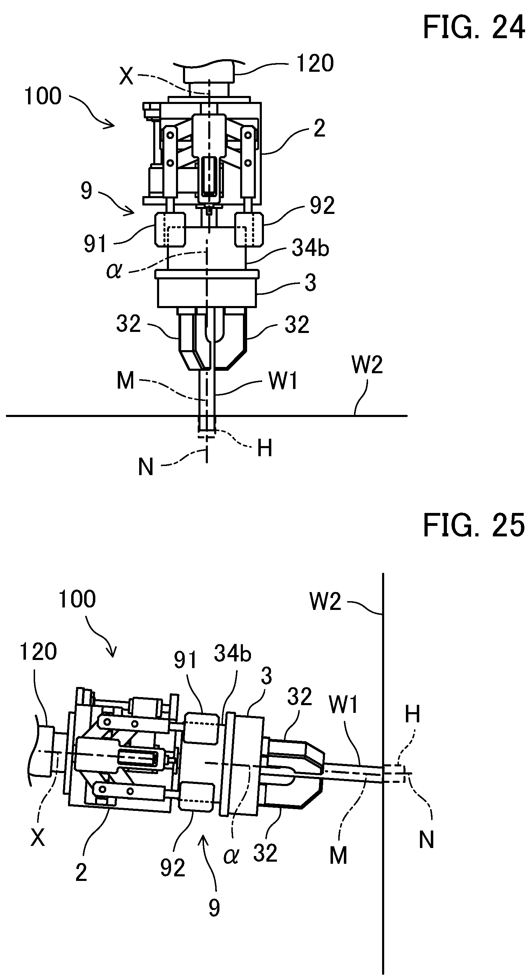

Thereafter, in the step S4, the controller 130 causes the robot arm 120 and the hand 100 to perform an insertion action of inserting the workpiece W1 into the hole H by actuating the rotation actuator 7 with the first reference axis X substantially parallel to the axis N of the hole H. FIG. 22 is a schematic view of the hand 100 seen from the front in the insertion action. FIG. 23 is a schematic plan view illustrating a positional relationship between the workpiece W1 and the hole H in the insertion action. FIG. 24 is a schematic view of the hand 100 seen from the front when the insertion action is completed.

Specifically, as illustrated in FIG. 22, the controller 130 causes the robot arm 120 to change the tilt of the hand body 2 such that the first reference axis X is substantially parallel to the axis N of the hole H. Since an end of the workpiece W1 is inserted in the hole H, the gripper 3 is restrained in a state where the second reference axis α and the axis N of the hole H are aligned in a straight line. The disposition of the coupler 4 allows the gripper 3 to be decentered and tilted with respect to the first reference axis X. Consequently, the hand body 2 can be in a state where the first reference axis X is substantially parallel to and decentered with respect to the second reference axis α and the axis N. In some cases, the first reference axis X can be aligned with the second reference axis α and the axis N in a straight line.

In this state, the controller 130 actuates the straight-moving actuator 6 and the rotation actuator 7. The tilt coupler 47 can transfer rotation of the rotation shaft 71 about the first reference axis X to the gripper 3 as rotation about the second reference axis α with the second reference axis α of the gripper 3 decentered with respect to the first reference axis X. Consequently, the workpiece W1 advances in the direction of the second reference axis α, while rotating about the second reference axis α. Since the second reference axis α, the axis M, and the axis N are aligned in a straight line, the workpiece W1 is gradually inserted into the hole H while rotating about the axis N with the axis M coinciding with the axis N, as illustrated in FIG. 23. As a result, the workpiece W1 is smoothly inserted into the hole H.

When the straight-moving actuator 6 and the rotation actuator 7 operate, the lock actuator 93 also operates. Accordingly, the distance between the first holder 91 and the second holder 92 in the opening/closing direction Z increases.

As illustrated in FIG. 24, when the amount of advancement of the coupler 4 in the direction of the first reference axis X from the start of the insertion action reaches a predetermined amount, the controller 130 completes the insertion action. In a case where the workpiece W1 reaches the bottom of the hole H before the insertion action is completed, the first buffers 10 are deformed to absorb movement of the gripper 3 and the workpiece W1. Insertion of the workpiece W1 may be achieved not only by advancement of the coupler 4 but also by pushing the hand 100 by the robot arm 120.

Thereafter, the controller 130 actuates the opening/closing actuator 8 to thereby release grip of the workpiece W1 by the fingers 32. In this manner, the controller 130 completes the insertion work of the workpiece W 1.

The insertion work is applicable not only to a vertical hole but also to a horizontal hole. For example, insertion work of inserting the workpiece W1 into the hole H extending substantially horizontally by the hand 100 will be described. FIG. 17 shows a flowchart of the insertion work as described above.

The gripping action in step S1 is similar to that described above.

In step S2, the controller 130 causes the robot arm 120 and the hand 100 to perform a contact action. FIG. 25 is a schematic view of the hand 100 seen from the front when a contact action with the hole H whose axis N extends horizontally is completed.

Specifically, as illustrated in FIG. 25, the controller 130 moves the robot arm 120 such that the workpiece W1 is brought into contact with the opening edge of the hole H with the first reference axis X and the second reference axis α tilted with respect to the axis N of the hole H. The lock 9 is in the locked state.

Since the axis N of the hole H extends horizontally, the hand 100 is in a posture in which the first reference axis X intersects with the vertical direction. Although the hand 100 is also in a state where the first reference axis X tilts with respect to the vertical direction in the case of the vertical hole H, the angle formed by the vertical direction and the first reference axis X is larger than that in this case. At this time, the second holder 92 is located at a position lower than a position of the first holder 91. Most part of the self weights of the gripper 3 and the workpiece W1 is supported by the second holder 92. The expression "position lower than a position of the first holder 91" does not need to be immediately under the first holder 91 in the vertical direction. That is, the second holder 92 does not need to be aligned with the first holder 91 in the vertical direction, and it is sufficient that the height position of the first holder 91 is lower than the height position of the second holder 92.

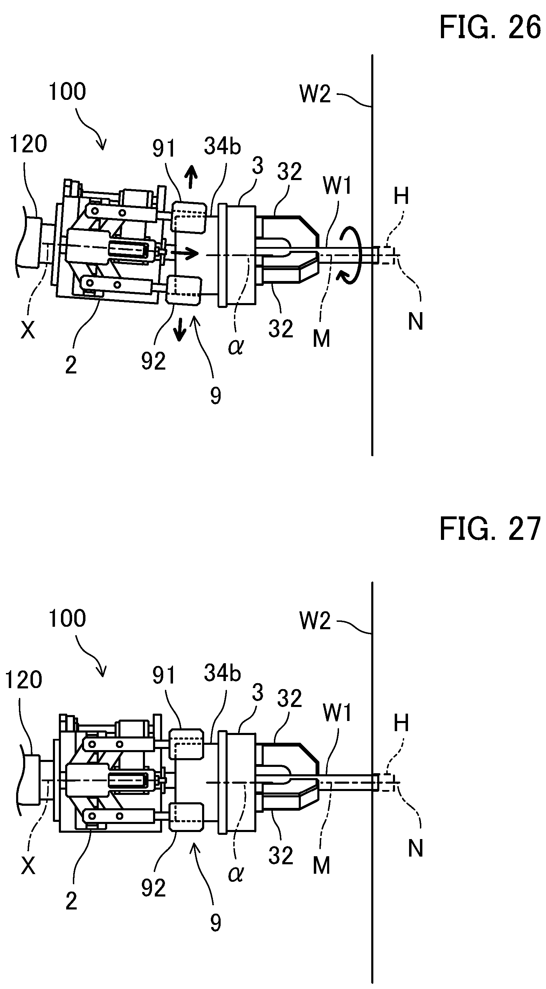

Then, in step S3, the controller 130 causes the hand 100 to perform an unlocking action and an introduction action. FIG. 26 is a schematic view of the hand 100 seen from the front when the introduction action into the hole H extending horizontally is completed.

The lock actuator 93 causes the first holder 91 and the second holder 92 to open in the opening/closing direction Z. In parallel with this process, the straight-moving actuator 6 moves the gripper 3 to the distal side in the direction of the first reference axis X, the rotation actuator 7 rotates the gripper 3 clockwise when seen in the advancing direction of the gripper 3.

When the lock 9 switches to the unlocked state, the gripper 3 is allowed to be decentered and tilted with respect to the first reference axis X. Since the first reference axis X tilts with respect to the vertical direction, the gripper 3 is decentered and tilted with respect to the first reference axis X by the self weights of the gripper 3 and the workpiece W1. The first holder 91 and/or the second holder 92 is located outside the gripper 3 in the radial direction about the first reference axis X. Thus, the decentered or tilted gripper 3 is supported by the first holder 91 and/or the second holder 92. In this example, since the second holder 92 is located at a position lower than the position of the first holder 91, most of the self weights of the gripper 3 and the workpiece W1 is supported by the second holder 92. Since the lock 9 includes the transfer rubber 97, the first holder 91 and the second holder 92 slightly open in the opening/closing direction Z against an elastic force of the transfer rubber 97 by the self weights of the gripper 3 and the workpiece W1.

The third contact surface 92a of the second holder 92 contacts the gripper 3 at one point (see FIG. 14). That is, the second holder 92 does not inhibit movement of the gripper 3 along the third contact surface 92a. The grip 3 that can be decentered and tilted by the coupler 4 can move along the third contact surface 92a.

The straight-moving actuator 6, the rotation actuator 7, and the lock actuator 93 continue to operate, and the workpiece W1 gradually changes the posture such that the axis M coincides the axis N, while rotating about the second reference axis α, that is, about the axis M. The first holder 91 and the second holder 92 gradually open in the opening/closing direction Z. It should be noted that since the lock 9 includes the transfer rubber 97, in the case where the gripper 3 contacts the first holder 91 or the second holder 92, the first holder 91 and the second holder 92 are elastically displaced in the opening/closing direction Z such that movement of the gripper 3 is not inhibited. In this manner, the end portion of the workpiece W1 is smoothly inserted in the hole H.

Subsequently, in step S4, the controller 130 causes the robot arm 120 and the hand 100 to perform an insertion action. FIG. 27 is a schematic view of the hand 100 seen from the front during the insertion action into the hole H extending horizontally.

The robot arm 120 changes the tilt of the hand body 2 such that the first reference axis X becomes substantially parallel to the axis N of the hole H. The hand body 2 can be in a state where the first reference axis X is substantially parallel to and decentered with respect to the second reference axis α and the axis N. In this state, the straight-moving actuator 6 and the rotation actuator 7 advance the coupler 4 in the direction of the first reference axis X while rotating about the first reference axis X. The decentering coupler 41 transfers rotation of the rotation shaft 71 about the first reference axis X to the gripper 3 as rotation about the second reference axis α, with the second reference axis α of the gripper 3 decentered with respect to the first reference axis X. As a result, the workpiece W1 advances in the second reference axis α, while rotating about the second reference axis α. Since the second reference axis α, the axis M, and the axis N are aligned in a straight line, the workpiece W1 is inserted in the hole H while rotating about the axis N with the axis M coinciding with the axis N. As a result, the workpiece W1 is smoothly inserted into the hole H.

When the straight-moving actuator 6 and the rotation actuator 7 operate, the lock actuator 93 also operates. Accordingly, the distance between the first holder 91 and the second holder 92 in the opening/closing direction Z increases.

When the insertion action is completed, the controller 130 operates the opening/closing actuator 8 to thereby release gripping of the workpiece W1 by the fingers 32. In this manner, the controller 130 completes the insertion work of the workpiece W1.

As described above, in the insertion work, the workpiece W1 is inserted into the hole H by rotating the workpiece W1 about the second reference axis α from the state where the second reference axis α is tilted with respect to the axis N of the hole H and the workpiece W1 is in point contact or in line contact with the opening edge of the hole H (hereinafter, such insertion will be referred to as "tilting rotary insertion"). The use of the hand 100 for the insertion work eases tilting rotary insertion of the workpiece W1. Specifically, from the state where the second reference axis α is tilted with respect to the axis N of the hole H and the workpiece W1 is in point contact or in line contact with the opening edge of the hole H, the rotation actuator 7 is actuated, that is, the rotation shaft 71 is rotated about the first reference axis X so that the workpiece W1 is gradually inserted into the hole H with the axis M coinciding with the axis N, and in order to enable such insertion, the gripper 3 tilts with respect to the first reference axis X accordingly. Even in the state where the gripper 3 is tilted with respect to the first reference axis X, the coupler 4 can transfer rotation of the rotation shaft 71 about the first reference axis X to the gripper 3 as rotation about the second reference axis α. Since the workpiece W1 is inserted into the hole H while rotating about the second reference axis α, the workpiece W1 is more smoothly inserted into the hole H. The use of the hand 100 for the insertion work eases tilting rotary insertion of the workpiece W1, irrespective of the orientation of the axis N of the hole H.

In the thus-configured hand 100, since the coupler 4 flexibly supports the gripper 3, specifically, supports the gripper 3 such that the gripper 3 is capable of being decentered and tilted with respect to the first reference axis X, even if the workpiece gripped by the gripper 3 is displaced from a desired position, the coupler 4 absorbs the displacement and the workpiece can be placed at the desired position. Accordingly, positioning accuracy required for the hand 100 and the robot arm 120 can be reduced.

This flexible support of the gripper 3 by the hand 100 is not achieved by backlash of components of the hand 100 or rigidity of the components themselves, but is achieved by the decentering coupler 41 and the tilt coupler 47. In the case of flexibly supporting the gripper 3 by backlash of components or other means, flexibility of the support is determined by circumstances, and thus, design and management are difficult. On the other hand, with the decentering coupler 41 and the tilt coupler 47, flexibility of support and a movable region of the gripper 3 can be appropriately designed and managed.

In addition, the coupler 4 does not flexibly support the entire hand 100 including the hand body 2, but flexibly supports the gripper 3. That is, as compared to the case where the coupler 4 also supports the hand body 2, the weight of members supported by the coupler 4 is reduced. As a result, inertia (i.e., moment of inertia) of the members supported by the coupler 4 is reduced, and responsiveness in tilting or decentering the gripper 3 with respect to the first reference axis X is enhanced.

Further, to achieve low inertia of the gripper 3, the opening/closing actuator 8 that opens and closes the gripper 3 is included in the hand body 2. The coupler 4 includes the power transfer 5 that transfers a driving force of the opening/closing actuator 8 to the gripper 3 with the second reference axis α decentered or tilted with respect to the first reference axis X. Specifically, the power transfer 5 includes the first coupling 51 including the first ball coupling 51 and the second ball coupling 53. Even in the configuration in which the opening/closing actuator 8 is included in the hand body 2 and the coupler 4 supports the gripper 3 such that the gripper 3 is capable of being decentered or tilted, this power transfer 5 can open and close the gripper 3 with a driving force of the opening/closing transfer 8.

The gripper 3 rotates about the second reference axis α. Accordingly, the use of the hand 100 eases the work of inserting a workpiece into a hole. That is, in the case of inserting a workpiece into a hole while rotating the workpiece, the workpiece can be smoothly inserted into the hole, as compared to the case of simply inserting the workpiece into the hole without rotating the workpiece.

In addition, to achieve low inertia of the gripper 3, the rotator 7 that rotates the gripper 3 about the second reference axis α is included in the hand body 2. The coupler 4 transfers a driving force of the rotation actuator 7 to the gripper 3 with the second reference axis α decentered or tilted with respect to the first reference axis X. As a result, even in the configuration in which the rotation actuator 7 is included in the hand body 2 and the coupler 4 supports the gripper 3 such that the gripper 3 is capable of being tilted or decentered, the gripper 3 can be rotated with the driving force of the rotation actuator 7.

The hand 100 moves the coupler 4 in the direction of the first reference axis X by the straight-moving actuator 6. Thus, without movement of the hand body 2, that is, without movement of the robot arm 120, the workpiece W1 can be inserted into the hole H with the tilt of the workpiece W1 changed accordingly.

In addition, since the driving sources of the straight-moving actuator 6 and the rotation actuator 7 are the common second motor 61 and the straight-moving actuator 6 and the rotation actuator 7 operate at the same time, the rotation shaft 71 can easily advance in the direction of the first reference axis X while rotating about the first reference axis X.

Since the hand 100 includes the lock 9, the gripper 3 cannot be always decentered or tilted with respect to the first reference axis X, and the lock 9 can prevent decentering and tilting of the gripper 3. The position of the gripper 3 can be stabilized by locking the coupler 4 by the lock 9. For example, in bringing the workpiece W1 in point contact with the opening edge of the hole H, the lock 9 locks the coupler 4 so that the position of the workpiece W1 can be thereby stabilized and the position adjustment of the workpiece W1 can be accurately performed.

When the lock 9 locks the coupler 4, the second reference axis α and the first reference axis X are aligned in a straight line. With this configuration, in the locked state by the lock 9, control of the position of the hand 100 with reference to the first reference axis X of the hand body 2 involves control of the position of the second reference axis α of the gripper 3. For example, position control in causing the robot arm 120 and the hand 100 to perform a contact action is facilitated.

In addition, the lock 9 switches, by the opening/closing action, between the locked state of the coupler 4 by contacting the gripper 3 and the unlocked state of the coupler 4 by separating from the gripper 3. Thus, the lock 9 can switch between the locked state and the unlocked state of the coupler 4 immediately. For example, as another possible configuration, movement of the coupler 4 may be locked by fitting the gripper 3 and another member to each other in the direction of the first reference axis X. However, to release the locked state, one of the gripper 3 and the other member needs to be completely pulled out from the other, and it takes time to release the locked state. Further, during an action of pulling one of the gripper 3 and the other member from the other, when a force is exerted in a direction intersecting with the pulling direction, the gripper 3 might get stuck on the other member to cause interference so that the pulling action might not be performed smoothly. On the other hand, the lock 9 is separated from the gripper 3 by the opening/closing action, and thus, can be immediately separated from the gripper 3. As a result, the coupler 4 can be unlocked immediately. In release from the locked state, the distance between the gripper 3 and the lock 9 increases by separation of the lock 9 from the gripper 3, and thus, interference between the gripper 3 and the lock 9 is less likely to occur. In addition, the separation of the lock 9 from the gripper 3 by the opening/closing action not only unlocks the locked state but also eliminates the interference with the gripper 3. That is, even when interference between the gripper 3 and the lock 9 occurs, the lock 9 can easily eliminate the interference

The lock 9 includes the transfer rubber 97. Specifically, the lock transfer 94 that transfers a driving force of the second motor 61 and displaces the first holder 91 and the second holder 92 includes the transfer rubber 97. More specifically, in the lock transfer 94, the first transfer 95 and the second transfer 96 are elastically coupled to each other by the transfer rubber 97. Since the lock 9 elastically retains the gripper 3, even while the gripper 3 is retained by the lock 9, the gripper 3 can be displaced in accordance with elastic deformation of the transfer rubber 97. As a result, even in the locked state of the lock 9, the hand 100 can absorb displacement of the gripper 3 within the range of elastic deformation of the transfer rubber 97.

Further, since the gripper 3 can be decentered or tilted, in the unlocked state of the lock 9, the gripper 3 might contact the first holder 91 and/or the second holder 92. Especially in a case where the hand 100 is in a posture in which the first reference axis X intersects with the vertical direction, in the unlocked state of the lock 9, the gripper 3 is likely to be decentered or tilted by self weight or a load of the workpiece W1. With some tilt angle of the first reference axis X and some opening degrees of the first holder 91 and the second holder 92, the gripper 3 contacts the first holder 91 and/or the second holder 92 and is supported by the holder 91 and/or the second holder 92. In such a case, the first holder 91 and/or the second holder 92 is elastically deformable in the opening/closing direction Z, and thus, can elastically support the gripper 3 without inhibiting movement of the gripper 3. As a result, smooth movement of the gripper 3 can be achieved.

Furthermore, the first holder 91 contacts the gripper 3 at at least two points in the contact state, and the second holder 92 contacts the gripper 3 at one point in the contact state. Thus, positional accuracy of the gripper 3 can be enhanced.

Moreover, when the gripper 3 is relatively displaced in the unlocked state of the lock 9, the gripper 3 can contact the first holder 91 and/or the second holder 92. In a case where the hand 100 is used in a posture in which the second holder 92 is located at a position lower than a position of the first holder 91, the gripper 3 can contacts the second holder 92 located lower than the first holder 91 to be supported by the second holder 92. At this time, since the second holder 92 supports the gripper 3 at one point, the gripper 3 can move along the shape of the second holder 92. If the gripper 3 is supported by the first holder 91, the first holder 91, which supports the gripper 3 at two points, supports the gripper 3 such that the gripper 3 is non-displaceable. **In** this case, the function of the coupler 4, that is, the ability of changing the position of the gripper 3, cannot be sufficiently exhibited. That is, the second holder 92 supports the gripper 3 only at one point to thereby support the self weight of the gripper 3 with the function of the coupler 4 exhibited.

Since the hand 100 includes the first buffers 10, when an excessive force in the direction of the first reference axis X is exerted on the gripper 3, the first buffers 10 can absorb such a force. As a result, accuracy in controlling the position of the gripper 3 in the direction of the first reference axis X can be reduced.

In addition, the lock 9 elastically supports the first holder 91 and the second holder 92 by the second buffer 98 in the direction of the first reference axis X. Since the first holder 91 and the second holder 92 are elastically displaceable in the direction of the first reference axis X, even in the locked state by the lock 9, the gripper 3 can move relative to the hand body 2 in the direction of the first reference axis X. In this manner, the lock 9 retains the gripper 3 such that the gripper 3 is elastically displaceable in the direction of the first reference axis X so that in the locked state, the first buffers 10 can also effectively function to absorb a force in the direction of the first reference axis X exerted on the gripper 3.

The driving source of the lock actuator 93 is the second motor 61 and also serves as the driving source of the straight-moving actuator 6. The driving source of the lock actuator 93 also serves as the driving source of the rotation actuator 7. Accordingly, the driving source of the hand 100 can be reduced, and thus, the number of parts and costs can be reduced. In addition, since the driving source is common, the straight-moving actuator 6, the rotation actuator 7, and the lock actuator 93 operate in conjunction with one another. Accordingly, the unlocking action of the lock 9 and the introduction action of the workpiece W1 can be performed at the same time. As a result, the time after contact of the workpiece W1 with the opening edge of the hole H is completed and before the workpiece W1 is partially inserted in the hole H is shortened, and consequently, the time necessary for the insertion work is shortened.

### OTHER EMBODIMENTS

In the foregoing section, the embodiment has been described as an example of the technique disclosed in the present application. The technique disclosed here, however, is not limited to this embodiment, and is applicable to other embodiments obtained by changes, replacements, additions, and/or omissions as necessary. Components described in the above embodiment may be combined as a new exemplary embodiment. Components provided in the accompanying drawings and the detailed description can include components unnecessary for solving problems as well as components necessary for solving problems in order to exemplify the technique. Therefore, it should not be concluded that such unnecessary components are necessary only because these unnecessary components are included in the accompanying drawings or the detailed description.

For example, the hand 100 may not be coupled to the robot arm 120. The hand 100 may be applied not only to the robot 110 but also to dedicated machines and the like.

The work performed by the hand 100 is not limited to insertion work. The work of the hand 100 may be work such as the work of simply picking components or the work of placing components at a predetermined place.

The insertion work may be not only simple insertion of the workpiece W1 into the hole H but also work such as press fitting of the workpiece W1 into the hole H or screwing of the workpiece W1 into a screw hole. The insertion work is not limited to tilting rotary insertion. Specifically, in inserting the workpiece W1 into the hole H, the workpiece W1 may be inserted into the hole H from a state where the second reference axis α and the axis N of the hole H are arranged substantially in parallel or aligned in a straight line. Alternatively, in inserting the workpiece W1 into the hole H, the workpiece W1 may be inserted into the hole H from a state where the workpiece W1 is in contact with the opening edge of the hole H at a line or at multiple points.

In the insertion work described above, the robot system 1000 performs the introduction action of introducing the workpiece W1 into the hole H by tilting rotary insertion, and then, in the state where the first reference axis X is made substantially parallel to the axis N of the hole H, further performs the insertion action. However, the present disclosure is not limited to this example. For example, after the introduction action, insertion of the workpiece W1 into the hole H may be continued with the first reference axis X kept tilted with respect to the axis N of the hole H.

In the hand 100, at least one of the straight-moving actuator 6 or the rotation actuator 7 may be omitted. For example, the robot arm 120 may move the entire hand 100 straight in the direction of the first reference axis X or rotate the entire hand 100 about the first reference axis X.

It is sufficient for the coupler 4 to cause the second reference axis α of the gripper 3 to be decentered or tilted with respect to the first reference axis X. That is, the coupler 4 only needs to enable one of decentering and tilting of the gripper 3.

A mechanism for decentering the second reference axis α of the gripper 3 with respect to the first reference axis X is not limited to the configuration of the decentering coupler 41. For example, the decentering coupler 41 may include the second coupling 45, the decentered body 42 or may include the rolling elements 43 and the first disc 71c.

The second coupling 45 is not limited to an Oldham coupling. The second coupling 45 only needs to be a coupling that transfers rotation between two decentered axes. For example, the second coupling 45 may be a Schmidt coupling, or a pin coupling in which a pin attached to a disc on one axis is fitted in a round hole in a disc on another axis to thereby transfer rotation.

The third coupling 48 is not limited to a universal coupling. The third coupling 48 only needs to be a coupling that transfers rotation between two tilted axes (i.e., two axes with angular misalignment). For example, the third coupling 48 may be a flexible coupling, a torque coil, or a ball joint.

The operator 33 of the gripper 3 is not limited to the linkage. The operator 33 only needs to be a mechanism that is driven by rotation of the opening/closing shaft 84 to open and close the fingers 32. For example, the operator 33 may be a mechanism that opens and closes the fingers 32 by a slider technique or a rack and pinion technique.

The first coupling 51 is not limited to the first ball coupling 52 and the second ball coupling 53. The first coupling 51 only needs to be a coupling that transfers rotation between two decentered or tilted axes. For example, the first coupling 51 may be one or more universal couplings, flexible couplings, torque coils, ball joints, Oldham couplings, Schmidt couplings, or pin couplings.

The lock 9 is not limited to the configuration described above. The lock 9 may employ any configuration as long as the lock 9 switches between the locked state and the unlocked state by the opening/closing action. For example, the lock 9 may further include one or more other holders in addition to the first holder 91 and the second holder 92. For example, the lock 9 may include three holders that perform an opening/closing action.

In the locked state, the lock 9 may retain the gripper 3 by contacting a portion of the gripper 3 other than the second cylinder 34b, for example, the first cylinder 34a.

The first holder 91 and the second holder 92 contact the outer side of the gripper 3 by closing, but the present disclosure is not limited to this example. The first holder 91 and the second holder 92 may be located inside the gripper 3 to contact the inner side of the gripper 3 by opening.

The configuration of the lock actuator 93 is not limited to the configuration described above. The driving source of the lock actuator 93 may be separated from the driving source of the straight-moving actuator 6 or the rotation actuator 7. That is, the lock actuator 93 may move the first holder 91 and the second holder 92, independently of the straight-moving actuator 6 or the rotation actuator 7. The lock transfer 94 may not include the first transfer 95, the second transfer 96, and the transfer rubber 97. For example, the lock transfer 94 may be a linear guide or a screw feeder that transfers a driving force of a motor to the first holder 91 and the second holder 92 and guides the first holder 91 and the second holder 92 in the opening/closing direction Z. In this case, a portion coupling the linear guide or the screw feeder to the first holder 91 and the second holder 92 may include a first elastic structure.

The first elastic structure that elastically retains the gripper 3 in the locked state is not limited to the transfer rubber 97. For example, the first elastic structure may not be rubber, but may be a spring. For example, instead of the transfer rubber 97, a coil spring may be placed as a first elastic structure in the engagement hole 96h. The position of the first elastic structure is not limited to the position of the transfer rubber 97 described above. For example, the first holder 91 and the third link 96c may be elastically coupled to each other in the opening/closing direction Z through the first elastic structure. Similarly, the second holder 92 and the sixth link 96f may be elastically coupled to each other in the opening/closing direction Z through the first elastic structure. Alternatively, the first holder 91 and the second holder 92 may be elastic bodies such as silicone rubber having elasticity in the opening/closing direction Z.

Although the second buffer 98 is located between the second transfer 96 and the first and second holders 91 and 92, the present disclosure is not limited to this example.

The flowchart is merely an example. The steps in the flowchart may be changed, replaced, added, omitted, or the like as appropriate. Further, the order of steps in the flowchart may be changed or serial processing may be performed in parallel. For example, step S3 and step S4 may be consecutively performed without a boundary between the introduction action and the insertion action.

Functions performed by constitutional elements described herein may be implemented in circuitry or processing circuitry including a general-purpose processor, an application-specific processor, an integrated circuit, an application specific integrated circuit (ASIC), a central processing unit (CPU), conventional circuitry, and/or a combination thereof programmed to perform the functions described herein. A processor includes transistors and other circuits, and is regarded as circuitry or arithmetic circuitry. A processor may be a programmed processor that performs programs stored in a memory.

Circuitry, a unit, and means herein are hardware that is programmed to perform or performs the described functions. The hardware may be any hardware disclosed herein, or any hardware programmed or known to perform the functions described.

If the hardware is a processor considered to be of a type of circuitry, the circuitry, means, or a unit is a combination of hardware and software used to configure the hardware and/or the processor.

The techniques of the present disclosure described above are summarized as follows.
[1] A hand 100 includes: a hand body 2; a gripper 3 that grips a workpiece; a coupler 4 that couples the gripper 3 to the hand body 2 such that a relative position of the gripper 3 to the hand body 2 is changeable; and a lock 9 that locks movement of the coupler 4, wherein the lock 9 switches, by an opening/closing action, between a locked state where the lock 9 locks movement of the coupler 4 by contacting the gripper 3 and an unlocked state where the lock 9 unlocks movement of the coupler 4 by separating from the gripper 3.

In this configuration, the hand 100 holds a workpiece by the gripper 3 whose relative position to the hand body 2 is changeable. The hand 100 can absorb displacement of the gripper 3 by the coupler 4. Thus, even in a case where positional accuracy of the gripper 3 is not relatively high, work by the gripper 3 can be appropriately performed. In addition, the position of the entire hand 100 including the hand body 2 is not changed but the relative position of the gripper 3 is changeable. Accordingly, inertia moment of members supported by the coupler 4 can be reduced. As a result, responsiveness in changing the relative position of the gripper 3 can be enhanced.

In addition, since the lock 9 switches between the locked state of the coupler 4 and the unlocked state of the coupler 4 by the opening/closing action, and thus, can immediately switch between the locked state and the unlocked state. Further, in release from the locked state, the distance between the gripper 3 and the lock 9 increases by separation of the lock 9 from the gripper 3, and thus, interference between the gripper 3 and the lock 9 is less likely to occur. Moreover, the separation of the lock 9 from the gripper 3 by the opening/closing action not only releases the locked state but also eliminates interference with the gripper 3. Even when interference between the gripper 3 and the lock 9 occurs, the lock 9 can easily eliminate the interference

[2] In the hand 100 of [1], the lock 9 includes a transfer rubber 97 (first elastic structure), locks movement of the coupler 4 by elastically retaining the gripper 3 in the locked state.

In this configuration, even while the gripper 3 is retained by the lock 9, the gripper 3 can be displaced in accordance with elastic deformation of the transfer rubber 97. That is, even in the locked state of the lock 9, the coupler 4 can displace the gripper 3 relative to the hand body 2 within the range of elastic deformation of the transfer rubber 97. As a result, even in the locked state of the lock 9, the hand 100 can absorb displacement of the gripper 3 within the range of elastic deformation of the transfer rubber 97. Thus, even in a case where positional accuracy of the gripper 3 is not relatively high, work by the gripper 3 can be appropriately performed.

[3] In the hand 100 of [1] or [2], the lock 9 includes a first holder 91 and a second holder 92 that contact the gripper 3 in the locked state, and a lock actuator 93 that causes the first holder 91 and the second holder 92 to perform an opening/closing action, the lock actuator 93 includes a second motor 61 (lock driving source) that generates a driving force, and a lock transfer 94 that couples the second motor 61 to the first holder 91 and the second holder 92 and transfers the driving force of the second motor 61 to the first holder 91 and the second holder 92, and the transfer rubber 97 is included in the lock transfer 94.

In this configuration, the transfer rubber 97 is included in the lock transfer 94 that transfers a driving force of the second motor 61 and displaces the first holder 91 and the second holder 92. When the transfer rubber 97 elastically deforms, the state of the lock transfer 94 changes, and as a result, the positions of the first holder 91 and the second holder 92 can change. That is, the elastic change of the state of the lock transfer 94 achieves elastic retention of the gripper 3 by the first holder 91 and the second holder 92.

[4] In the hand 100 of any one of [1] to [3], the lock transfer 94 includes a first transfer 95 that receives the driving force from second motor 61, and a second transfer 96 that transfers the driving force to the first holder 91 and the second holder 92, and the transfer rubber 97 elastically couples the first transfer 95 and the second transfer 96 to each other.

In this configuration, the transfer rubber 97 elastically couples the first transfer 95 and the second transfer 96 included in the lock transfer 94. That is, the transfer rubber 97 transfers the driving force of the second motor 61 from the first transfer 95 to the second transfer 96. An external force exerted on the first holder 91 and the second holder 92 is transmitted to the transfer rubber 97 through the second transfer 96. Consequently, the transfer rubber 97 elastically deforms, and accordingly, the first holder 91 and the second holder 92 elastically deform.

[5] In the hand 100 of any one of [1] to [4], the lock 9 includes a first holder 91 and a second holder 92 that contact the gripper 3 in the locked state, and a lock actuator 93 that causes the first holder 91 and the second holder 92 to perform an opening/closing action, the first holder 91 and the second holder 92 switch between a contact state with the gripper 3 and a separated state from the gripper 3 by performing the opening/closing action, the first holder 91 contacts the gripper 3 at at least two points in the contact state, and the second holder 92 contacts the gripper 3 at one point in the contact state.

In this configuration, the first holder 91 and the second holder 92 retain the gripper 3 by contact at at least three points, and thus, positional accuracy of the gripper 3 can be enhanced.

[6] In the hand 100 of any one of [1] to [5], the gripper 3 moves straight with respect to the hand body 2 in a direction of a predetermined first reference axis X, the first holder 91 and the second holder 92 perform opening/closing action in a direction intersecting with the direction of the first reference axis X, and in a case where the hand 100 takes a posture in which the first reference axis X intersects with a vertical direction, the second holder 92 is located at a position lower than a position of the first holder 91.

In this configuration, when the lock 9 switches from the locked state to the unlocked state, the gripper 3 becomes relatively displaceable by the coupler 4. In a case where the distance from the first holder 91 and the second holder 92 to the gripper 3 is not relatively large in the unlocked state of the lock 9, the gripper 3 can relatively displace to contact the first holder 91 or the second holder 92. Since the second holder 92 is located at the position lower than the position of the first holder 91, the second holder 92 can support the gripper 3 that displaces by self weight. The second holder 92 supports the gripper 3 at one point, and thus, the gripper 3 can move along the shape of the second holder 92. That is, the second holder 92 can support the self weight of the gripper 3 with the coupler 4 allowed to exhibit the function thereof.

In other words, in the locked state of the lock 9, the first holder 91 and the second holder 92 can retain the gripper 3 with high positional accuracy, whereas in the unlocked state of the lock 9, the second holder 92 can support the gripper 3 such that the gripper 3 is relatively displaceable.

[7] In the hand 100 of any one of [1] to [6], the gripper 3 moves straight with respect to the hand body 2 in a direction of a direction of a predetermined first reference axis X, the lock 9 includes a first holder 91 and a second holder 92 that contact the gripper 3 in the locked state, a lock actuator 93 that causes the first holder 91 and the second holder 92 to perform an opening/closing action, and a second buffer 98 (buffer) that elastically supports the first holder 91 and the second holder 92 in the direction of the first reference axis X, and the second buffer 98 includes a guide 98a that guides the first holder 91 and the second holder 92 such that the first holder 91 and the second holder 92 are displaceable in the direction of the first reference axis X, and a second spring 98b (second elastic structure) that elastically supports the first holder 91 and the second holder 92 along the guide 98a.

In this configuration, the first holder 91 and the second holder 92 are caused to perform an opening/closing action by the lock actuator 93, and are elastically supported by the second buffer 98 in the direction of the first reference axis X. Thus, even in the locked state by the lock 9, the gripper 3 can move relative to the hand body 2 in the direction of the first reference axis X, together with the first holder 91 and the second holder 92. For example, in the configuration in which the hand 100 includes the first buffers 10 that absorb a force in the direction of the first reference axis X exerted on the gripper 3, even in the locked state of the lock 9, the first buffers 10 can effectively function.

[8] The hand 100 of any one of [1] to [7] further includes a straight-moving actuator 6 that causes the gripper 3 to move straight with respect to the hand body in a direction of a predetermined first reference axis X, the lock 9 includes a first holder 91 and a second holder 92 that contact the gripper 3 in the locked state, and a lock actuator 93 that causes the first holder 91 and the second holder 92 to perform an opening/closing action, the straight-moving actuator 6 includes a second motor 61 (straight-moving driving source) that generates a driving force, and a straight-moving transfer 67 that transfers the driving force of the second motor 61 to the gripper 3, the lock actuator 93 includes a second motor 61 that generates a driving force, and a lock transfer 94 that couples the second motor 61 to the first holder 91 and the second holder 92 and transfers the driving force of the second motor 61 to the first holder 91 and the second holder 92, and the second motor 61 of the straight-moving actuator 6 and the second motor 61 of the and lock actuator 93 are common.

In this configuration, the common second motor 61 can operates the straight-moving actuator 6 and the lock actuator 93. By reducing the number of driving sources of the hand 100, the number of parts in the hand 100 and costs can be reduced.

[9] In the hand 100 of any one of [1] to [8], a predetermined first reference axis X is defined in the hand body 2, a predetermined second reference axis α is defined in the gripper 3, and the coupler 4 includes at least one of a decentering coupler 41 that supports the gripper 3 such that the second reference axis α is capable of being decentered with respect to the first reference axis X, or a tilt coupler 47 that supports the gripper 3 such that the second reference axis α is capable of being tilted with respect to the first reference axis X.

In this configuration, the hand 100 grips a workpiece with the gripper 3 in which the second reference axis α is capable of being decentered or tilted with respect to the first reference axis X. Displacement of the gripper 3 can be absorbed by the decentering coupler 41 or the tilt coupler 47. Thus, even in a case where positional accuracy of the gripper 3 is not relatively high, work by the gripper 3 can be appropriately performed. In addition, since the coupler 4 does not support the entire hand 100 including the hand body 2 such that the hand 100 is capable of being decentered or tilted, but supports the gripper 3 such that the gripper 3 is capable of being decentered or tilted. Accordingly, inertia moment of members supported by the coupler 4 can be reduced. As a result, responsiveness in tilting or decentering the gripper 3 with respect to the first reference axis X can be enhanced.

[10] In the hand 100 of any one of [1] to [9], the coupler 4 includes both the decentering coupler 41 and the tilt coupler 47.

In this configuration, the coupler 4 can absorb both decentering and the angular misalignment of the second reference axis α with respect to the first reference axis X. That is, the coupler 4 can more flexibly absorb displacement of the gripper 3.

[11] In the hand 100 of any one of [1] to [10], the lock 9 locks movement of the coupler with the first reference axis and the second reference axis aligned in a straight line.

In this configuration, in the locked state by the lock 9, control of the position of the hand 100 with reference to the first reference axis X of the hand body 2 involves control of the position of the second reference axis α of the gripper 3.

[12] In the hand 100 of any one of [1] to [11], the hand body 2 includes an opening/closing actuator 8 that opens and closes gripper 3, the coupler 4 includes a power transfer 5 that transfers a driving force of the opening/closing actuator 8, and the power transfer 5 transfers the driving force of the opening/closing actuator 8 to the gripper 3 with the second reference axis α decentered or tilted with respect to the first reference axis X.

In this configuration, the opening/closing actuator 8 that opens and closes the gripper 3 is included in the hand body 2 so that weight reduction of the gripper 3 can be thereby facilitated. In addition, even in the configuration in which the opening/closing actuator 8 is included in the hand body 2 and the coupler 4 supports the gripper 3 such that the gripper 3 is capable of being decentered or tilted with respect to the first reference axis X, a driving force of the opening/closing transfer 8 can also be appropriately transferred to the gripper 3 through the power transfer 5. That is, the power transfer 5 achieves both driving of the gripper 3 by the opening/closing actuator 8 included in the hand body 2 and support of the gripper 3 by the coupler 4 such that the gripper 3 is capable of being decentered or tilted.

[13] The hand 100 of any one of [1] to [12], the opening/closing actuator 8 includes a first motor 81 (opening/closing driving source) that generates a driving force, and an opening/closing shaft 84 that extends along the first reference axis X serving as a center axis and is rotated about the first reference axis X by the driving force of the first motor 81, the power transfer 5 includes a first coupling 51 that couples the opening/closing shaft 84 and the gripper 3 to each other, the coupler 4 includes a tilt coupler 47, the first coupling 51 transfers rotation of the opening/closing shaft 84 to the gripper 3 with the second reference axis α tilted with respect to the first reference axis X, and the gripper 3 includes a base 31, and fingers 32 that are supported by the base 31 and perform an opening/closing action by rotation of the opening/closing shaft 84.

In this configuration, the opening/closing actuator 8 rotates the opening/closing shaft 84 about the first reference axis X. The opening/closing shaft 84 is coupled to the gripper 3 through the first coupling 51 of the power transfer 5. Accordingly, even in the state where the second reference axis α is tilted with respect to the first reference axis X, rotation of the opening/closing shaft 84 about the first reference axis X is transferred to the operator 3. As a result, the fingers 32 can be appropriately opened and closed.

[14] In the hand 100 of any one of [1] to [13], the coupler 4 further includes the decentering coupler 41, and first coupling 51 transfers rotation of the opening/closing shaft 84 to the gripper 3 with the second reference axis α decentered with respect to the first reference axis X.

In this configuration, the coupler 4 includes both the decentering coupler 41 and the tilt coupler 47. Even in any of the state where the second reference axis α is decentered with respect to the first reference axis X and the state where the second reference axis α tilts with respect to the first reference axis X, the first coupling 51 can transfer rotation of the opening/closing shaft 84 to the gripper 3. As a result, even in the case where the gripper 3 is decentered or tilted with respect to the first reference axis X, the fingers 32 can be appropriately opened and closed.

[15] A robot system 1000 includes: the hand 1000 of any one of [1] to [14]; a robot arm 120 to which the hand 100 is coupled; and a controller 130 that controls the robot arm 120 and the hand 100, wherein the controller 130 causes the robot arm 120 and the hand 100 to perform insertion work of inserting the workpiece W1 gripped by the hand 100 into a predetermined hole H.

In this configuration, the insertion work of inserting the workpiece W1 into the hole H is performed by using the hand 100. The gripper 3 of the hand 100 is supported by the coupler 4 to enable change of the relative position to the hand body 2. Accordingly, without strict positional adjustment of the workpiece W1 to the hole H, appropriate displacement of the gripper 3 by the coupler 4 enables smooth insertion work of the workpiece W1 into the hole H.

[16] In the robot system of [15], a predetermined first reference axis X is defined in the hand body 2, a predetermined second reference axis α is defined in the gripper 3, and the coupler includes at least one of a decentering coupler 41 that supports the gripper 3 such that the second reference axis α is capable of being decentered with respect to the first reference axis X, or a tilt coupler 47 that supports the gripper 3 such that the second reference axis α is capable of being tilted with respect to the first reference axis X, and the controller 130 causes the robot arm 120 and the hand 100 to insert the workpiece W1 gripped by the gripper 3 into the hole H from a state where the second reference axis α is decentered or tilted with respect to an axis N of the hole H.

In this configuration, the workpiece W1 is inserted into the hole H from a state where the workpiece W1 is relatively displaced from the hole H. In this case, the workpiece W1 is guided by the opening edge of the hole H to be ready for fitting in the hole H. At this time, since the gripper 3 is capable of being decentered or tilted with respect to the first reference axis X, the workpiece W1 is allowed to change its posture to be thereby smoothly fitted in the hole H.

[17] The robot system 1000 of [15] or [16], the hand body 2 includes a rotation actuator 7 that is coupled to the coupler 4 and rotates the gripper 3 about the second reference axis α, the coupler 4 includes the tilt coupler 47, and transfers a driving force of the rotation actuator 7 to the gripper 3 with the second reference axis α tilted with respect to the first reference axis X, and the controller 130 moves the robot arm 120 such that the workpiece W1 gripped by the gripper 3 is brought into point contact with an opening edge of the hold H in a state where the tilt coupler 47 is locked by the lock 9 and the second reference axis α is tilted with respect to an axis N of the hole H, and operates the rotation actuator 7 with the tilt coupler 47 unlocked by the lock 9 to thereby insert the workpiece W1 into the hole H.

In this configuration, first, the robot arm 120 moves to the hand 100 to a state where the second reference axis α tilts with respect to the axis N of the hole H and the workpiece W1 is in point contact with the opening edge of the hole H. At this time, since the lock 9 locks the tilt coupler 47, positioning of the gripper 3 and the workpiece W1 can be accurately performed. Then, in inserting the workpiece W1 into the hole H, locking of the tilt coupler 47 by the lock 9 is released. Tilting rotary insertion is performed such that the workpiece W1 is inserted into the hole H by rotating the workpiece W1 about the second reference axis α from the state where the second reference axis α is tilted with respect to the axis N of the hole H and the workpiece W1 is in point contact with the opening edge of the hole H. In the tilting rotary insertion, the workpiece W1 is guided by the opening edge of the hole H to be smoothly introduced into the hole H. The coupler 4 supports the gripper 3 such that the gripper 3 is capable of being tilted with respect to the first reference axis X, and transfers a driving force of the rotation actuator 7 to the gripper 3 with the second reference axis α tilted with respect to the first reference axis X. Accordingly, the gripper 3 can continue rotation about the second reference axis α while changing the posture such that the second reference axis α coincides with the axis N of the hole H in accordance with introduction of the workpiece W1 into the hole H. Such movement of the gripper 3 can be achieved by flexible support of the gripper 3 by the coupler 4 without the need for movement of the hand body 2.

[18] In the robot system 1000 of any one of [15] to [17], the coupler 4 further includes the decentering coupler 41, and transfers a driving force of the rotation actuator 7 to the gripper 3 with the second reference axis α decentered with respect to the first reference axis X, and the controller 130 operates the robot arm 120 such that the first reference axis X becomes substantially parallel to the axis N of the hole H after the workpiece W1 gripped by the gripper 3 is partially inserted into the hole H, and then operates the rotation actuator 7 to further insert workpiece W1 into the hole H.

In this configuration, after the workpiece W1 has been partially inserted into the hole H by tilting rotary insertion, the robot arm 120 moves such that the first reference axis X becomes substantially parallel to the axis N of the hole H. Since the workpiece W1 is inserted in the hole H, the second reference axis α is aligned with the axis N in a straight line. Accordingly, the first reference axis X is aligned with the second reference axis α in a straight line or is substantially in parallel with the second reference axis α. The coupler 4 supports the gripper 3 such that the gripper 3 is capable of being decentered with respect to the first reference axis X, and transfers a driving force of the rotator 7 to the gripper 3 with the second reference axis α decentered with respect to the first reference axis X. Thus, the hand 100 can rotate the gripper 3 about the second reference axis α by the rotation actuator 7 in the state where the second reference axis α is aligned with the first reference axis X in a straight line or is decentered with respect to the first reference axis X. Consequently, the workpiece W1 is gradually inserted into the hole H while rotating about the axis N. At this time, since the first reference axis X is aligned with the axis N in a straight line or substantially in parallel with the axis N, as compared to a case where the first reference axis X is tilted with respect to the axis N, galling of the workpiece W1 with the hole H can be reduced. As a result, the workpiece W1 can be smoothly inserted into the hole H.

[19] In the robot system 1000 of any one of [15] to [18], the controller 130 moves the robot arm 120 such that the workpiece W1 gripped by the gripper 3 is brought into point contact with an opening edge of the hole H in a state where the lock 9 locks the tilt coupler 47 and the first reference axis X intersects with a vertical direction.

In this configuration, since the first reference axis X of the hand body 2 intersects with the vertical direction, the gripper 3 is decentered or tilted by self weight or a load of the workpiece W1 in the unlocked state of the lock 9. With some angle of the first reference axis X with respect to the vertical direction and some distance between the gripper 3 and the lock 9, the decentered or tilted gripper 3 contacts the lock 9. Even in such a case, the lock 9 elastically supports the gripper 3. That is, the lock 9 supports the gripper 3 without inhibiting movement of the gripper 3. As a result, smooth movement of the gripper 3 can be achieved.

[20] In the robot system 1000 of any one of [15] to [19], the gripper 3 moves straight with respect to the hand body 2 in a direction of a predetermined first reference axis X, the lock 9 includes a first holder 91 and a second holder 92 that contact the gripper 3 in the locked state, and a lock actuator 93 that causes the first holder 91 and the second holder 92 to perform an opening/closing action, the first holder 91 and the second holder 92 switch between a contact state with the gripper 3 and a separated state from the gripper 3 by performing the opening/closing action in a direction intersecting with the direction of the first reference axis X, the first holder 91 contacts the gripper 3 at at least two points in the contact state, the second holder 92 contacts the gripper 3 at one point in the contact state, and in inserting the workpiece W1 gripped by the gripper 3 into the hole H, the controller 130 moves the robot arm 120 such that the first reference axis X intersects with a vertical direction and the second holder 92 is located at a position lower than a position of the first holder 91.

In this configuration, in a case where the distance from the first holder 91 and the second holder 92 to the gripper 3 is not relatively large in the unlocked state of the lock 9, the gripper 3 can relatively displace to contact the first holder 91 or the second holder 92. Since the second holder 92 is located at the position lower than the position of the first holder 91, the second holder 92 can support the gripper 3 that displaces by self weight. The second holder 92 supports the gripper 3 at one point, and thus, the gripper 3 can move along the shape of the second holder 92. That is, the second holder 92 can support the self weight of the gripper 3 with the coupler 4 allowed to exhibit the function thereof.

In other words, in the locked state of the lock 9, the first holder 91 and the second holder 92 can retain the gripper 3 with high positional accuracy, whereas in the unlocked state of the lock 9, the second holder 92 can support the gripper 3 such that the gripper 3 is relatively displaceable.

## Claims

1. A hand comprising:
a hand body;
a gripper that grips a workpiece;
a coupler that couples the gripper to the hand body such that a relative position of the gripper to the hand body is changeable; and
a lock that locks movement of the coupler, wherein
the lock switches, by an opening/closing action, between a locked state where the lock locks movement of the coupler by contacting the gripper and an unlocked state where the lock unlocks movement of the coupler by separating from the gripper.

2. The hand according to claim 1, wherein
the lock includes a first elastic structure, locks movement of the coupler by elastically retaining the gripper in the locked state.

3. The hand according to claim 2, wherein
the lock includes a first holder and a second holder that contact the gripper in the locked state, and a lock actuator that causes the first holder and the second holder to perform an opening/closing action,
the lock actuator includes a lock driving source that generates a driving force, and a lock transfer that couples the lock driving source to the first holder and the second holder and transfers the driving force of the lock driving source to the first holder and the second holder, and
the first elastic structure is included in the lock transfer.

4. The hand according to claim 3, wherein
the lock transfer includes a first transfer that receives the driving force from the lock driving source, and a second transfer that transfers the driving force to the first holder and the second holder, and
the first elastic structure elastically couples the first transfer and the second transfer to each other.

5. The hand according to claim 1, wherein
the lock includes a first holder and a second holder that contact the gripper in the locked state, and a lock actuator that causes the first holder and the second holder to perform an opening/closing action,
the first holder and the second holder switch between a contact state with the gripper and a separated state from the gripper by performing the opening/closing action,
the first holder contacts the gripper at at least two points in the contact state, and
the second holder contacts the gripper at one point in the contact state.

6. The hand according to claim 5, wherein
the gripper moves straight with respect to the hand body in a direction of a predetermined first reference axis,
the first holder and the second holder perform the opening/closing action in a direction intersecting with the direction of the first reference axis, and
in a case where the hand takes a posture in which the first reference axis intersects with a vertical direction, the second holder is located at a position lower than a position of the first holder.

7. The hand according to claim 1, wherein
the gripper moves straight with respect to the hand body in a direction of a predetermined first reference axis,
the lock includes a first holder and a second holder that contact the gripper in the locked state, a lock actuator that causes the first holder and the second holder to perform an opening/closing action, and a buffer that elastically supports the first holder and the second holder in the direction of the first reference axis, and
the buffer includes a guide that guides the first holder and the second holder such that the first holder and the second holder are displaceable in the direction of the first reference axis, and a second elastic structure that elastically supports the first holder and the second holder along the guide.

8. The hand according to claim 1, further comprising a straight-moving actuator that causes the gripper to move straight with respect to the hand body in a direction of a predetermined first reference axis, wherein
the lock includes a first holder and a second holder that contact the gripper in the locked state, and a lock actuator that causes the first holder and the second holder to perform an opening/closing action,
the straight-moving actuator includes a straight-moving driving source that generates a driving force, and a straight-moving transfer that transfers the driving force of the straight-moving driving source to the gripper,
the lock actuator includes a lock driving source that generates a driving force, and a lock transfer that couples the lock driving source to the first holder and the second holder and transfers the driving force of the lock driving source to the first holder and the second holder, and
the straight-moving driving source and the lock driving source are common.

9. The hand according to claim 1, wherein
a predetermined first reference axis is defined in the hand body,
a predetermined second reference axis is defined in the gripper, and
the coupler includes at least one of a decentering coupler that supports the gripper such that the second reference axis is capable of being decentered with respect to the first reference axis, or a tilt coupler that supports the gripper such that the second reference axis is capable of being tilted with respect to the first reference axis.

10. The hand according to claim 9, wherein
the coupler includes both the decentering coupler and the tilt coupler.

11. The hand according to claim 9, wherein
the lock locks movement of the coupler with the first reference axis and the second reference axis aligned in a straight line.

12. The hand according to claim 9, wherein
the hand body includes an opening/closing actuator that opens and closes the gripper,
the coupler includes a power transfer that transfers a driving force of the opening/closing actuator to the gripper, and
the power transfer transfers the driving force of the opening/closing actuator to the gripper with the second reference axis decentered or tilted with respect to the first reference axis.

13. The hand according to claim 12, wherein
the opening/closing actuator includes an opening/closing driving source that generates a driving force, and an opening/closing shaft that extends along the first reference axis serving as a center axis and is rotated about the first reference axis by the driving force of the opening/closing driving source,
the power transfer includes a first coupling that couples the opening/closing shaft and the gripper to each other,
the coupler includes the tilt coupler,
the first coupling transfers rotation of the opening/closing shaft to the gripper with the second reference axis tilted with respect to the first reference axis, and
the gripper includes a base, and fingers that are supported by the base and perform an opening/closing action by rotation of the opening/closing shaft.

14. The hand according to claim 13, wherein
the coupler further includes the decentering coupler, and
first coupling transfers rotation of the opening/closing shaft to the gripper with the second reference axis decentered with respect to the first reference axis.

15. A robot system comprising:
the hand according to claim 1;
a robot arm to which the hand is coupled; and
a controller that controls the robot arm and the hand, wherein
the controller causes the robot arm and the hand to perform insertion work of inserting the workpiece gripped by the hand into a predetermined hole.

16. The robot system according to claim 15, wherein
a predetermined first reference axis is defined in the hand body,
a predetermined second reference axis is defined in the gripper, and
the coupler includes at least one of a decentering coupler that supports the gripper such that the second reference axis is capable of being decentered with respect to the first reference axis, or a tilt coupler that supports the gripper such that the second reference axis is capable of being tilted with respect to the first reference axis, and
the controller causes the robot arm and the hand to insert the workpiece gripped by the gripper into the hole from a state where the second reference axis is decentered or tilted with respect to an axis of the hole.

17. The robot system according to claim 16, wherein
the hand body includes a rotation actuator that is coupled to the coupler and rotates the gripper about the second reference axis,
the coupler includes the tilt coupler, and transfers a driving force of the rotation actuator to the gripper with the second reference axis tilted with respect to the first reference axis, and
the controller
moves the robot arm such that the workpiece gripped by the gripper is brought into point contact with an opening edge of the hole in a state where the tilt coupler is locked by the lock and the second reference axis is tilted with respect to an axis of the hole, and
operates the rotation actuator with the tilt coupler unlocked by the lock to thereby insert the workpiece into the hole.

18. The robot system according to claim 17, wherein
the coupler further includes the decentering coupler, and transfers a driving force of the rotation actuator to the gripper with the second reference axis decentered with respect to the first reference axis, and
the controller operates the robot arm such that the first reference axis becomes substantially parallel to the axis of the hole after the workpiece gripped by the gripper is partially inserted into the hole, and then operates the rotation actuator to further insert the workpiece into the hole.

19. The robot system according to claim 17, wherein
the controller moves the robot arm such that the workpiece gripped by the gripper is brought into point contact with an opening edge of the hole in a state where the lock locks the tilt coupler and the first reference axis intersects with a vertical direction.

20. The robot system according to claim 19, wherein
the gripper moves straight with respect to the hand body in a direction of a predetermined first reference axis,
the lock includes a first holder and a second holder that contact the gripper in the locked state, and a lock actuator that causes the first holder and the second holder to perform an opening/closing action,
the first holder and the second holder switch between a contact state with the gripper and a separated state from the gripper by performing the opening/closing action in a direction intersecting with the direction of the first reference axis,
the first holder contacts the gripper at at least two points in the contact state,
the second holder contacts the gripper at one point in the contact state, and
in inserting the workpiece gripped by the gripper into the hole, the controller moves the robot arm such that the first reference axis intersects with a vertical direction and the second holder is located at a position lower than a position of the first holder.
